(19) 

**Europäisches Patentamt**
**European Patent Office**
**Office européen des brevets**

(11) **EP 4 530 183 A1**

(12) **EUROPEAN PATENT APPLICATION**
published in accordance with Art. 153(4) EPC

(43) Date of publication:
**02.04.2025 Bulletin 2025/14**

(21) Application number: **22950237.2**

(22) Date of filing: **07.07.2022**

(51) International Patent Classification (IPC):
**B64C 39/00** (2023.01)  **G05D 1/00** (2024.01)
**G08G 5/02** (2006.01)

(52) Cooperative Patent Classification (CPC):
**B64C 39/00; B64U 70/95; G05D 1/00; G08G 5/54**

(86) International application number:
**PCT/JP2022/026893**

(87) International publication number:
**WO 2024/009443 (11.01.2024 Gazette 2024/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventors:
• **MATSUMURA, Nobuo**
**Tokyo 100-8310 (JP)**
• **SAKAMAKI, Hiroshi**
**Tokyo 100-8310 (JP)**

(74) Representative: **Pfenning, Meinig & Partner mbB
Patent- und Rechtsanwälte
Theresienhöhe 11a
80339 München (DE)**

(54) **TAKE-OFF AND LANDING SITE MONITORING DEVICE, TAKE-OFF AND LANDING SITE MONITORING METHOD, AND TAKEOFF AND LANDING SITE MONITORING SYSTEM**

(57) A take-off and landing site monitoring device (30) is configured to include: an image data acquiring unit (41) that acquires, from an imaging device (21) that images a take-off and landing site (1), image data indicating a captured image of the take-off and landing site (1); and an obstruction detecting unit (45) that determines the type of obstruction that hinders take-off and landing of a vertical take-off and landing aircraft using the take-off and landing site (1) on the basis of the image data acquired by the image data acquiring unit (41).

FIG. 3

EP 4 530 183 A1

# Description

## TECHNICAL FIELD

The present disclosure relates to a take-off and landing site monitoring device, a take-off and landing site monitoring method, and a take-off and landing site monitoring system.

## BACKGROUND ART

An aircraft that takes off and lands in a vertical direction without sliding is called a vertical take-off and landing aircraft (hereinafter, referred to as "VTOL aircraft"). Examples of the VTOL aircraft include a drone, a flying vehicle, and a helicopter. For example, Patent Literature 1 discloses a vertiport management system that manages a vertiport where a VTOL aircraft takes off and lands. The vertiport management system includes a sensor that monitors a state of the vertiport.

## CITATION LIST

## PATENT LITERATURE

Patent Literature 1: JP 2021-503677 A

## SUMMARY OF INVENTION

## TECHNICAL PROBLEM

In the vertiport management system disclosed in Patent Literature 1, although the sensor monitors the state of the vertiport, there is a problem that the type of obstruction that hinders take-off and landing of the VTOL aircraft cannot be found. When the type of obstruction is not found, an administrator or the like of the vertiport cannot easily remove the obstruction in some cases.

The present disclosure has been made in order to solve the above problem, and an object of the present disclosure is to obtain a take-off and landing site monitoring device capable of specifying the type of obstruction that hinders take-off and landing of a vertical take-off and landing aircraft.

## SOLUTION TO PROBLEM

A take-off and landing site monitoring device according to the present disclosure includes: an image data acquiring unit that acquires, from an imaging device that images a take-off and landing site, image data indicating a captured image of the take-off and landing site; and an obstruction detecting unit that determines the type of obstruction that hinders take-off and landing of a vertical take-off and landing aircraft using the take-off and landing site on the basis of the image data acquired by the image data acquiring unit.

## ADVANTAGEOUS EFFECTS OF INVENTION

According to the present disclosure, it is possible to specify the type of obstruction that hinders take-off and landing of a vertical take-off and landing aircraft.

## BRIEF DESCRIPTION OF DRAWINGS

FIG. 1 is an explanatory diagram illustrating a take-off and landing site 1 to which a take-off and landing site monitoring system according to a first embodiment is applied.
FIG. 2 is an explanatory diagram illustrating a take-off and landing airspace of a vertical take-off and landing aircraft M above the take-off and landing site 1.
FIG. 3 is a configuration diagram illustrating a take-off and landing site monitoring system according to the first embodiment.
FIG. 4 is a hardware configuration diagram illustrating hardware of a take-off and landing site monitoring device 30 according to the first embodiment.
FIG. 5 is a hardware configuration diagram of a computer in a case where the take-off and landing site monitoring device 30 is implemented by software, firmware, or the like.
FIG. 6 is a flowchart illustrating a take-off and landing site monitoring method which is a processing procedure performed by the take-off and landing site monitoring device 30.
FIG. 7 is a flowchart illustrating a processing procedure when "unauthorized occupation of a vertical take-off and landing aircraft", "presence of garbage", or "occurrence of fire" is recognized as the type of obstruction detected by an obstruction detecting unit 45.
FIG. 8 is a flowchart illustrating a processing procedure when "presence of a suspicious flying object" or a "presence of a bird" is recognized as the type of obstruction detected by the obstruction detecting unit 45.
FIG. 9 is a configuration diagram illustrating a take-off and landing site monitoring system according to a second embodiment.
FIG. 10 is a hardware configuration diagram illustrating hardware of a take-off and landing site monitoring device 30 according to the second embodiment.
FIG. 11 is an explanatory diagram illustrating an operation plan of the take-off and landing site 1 in which an operation state and the like of the take-off and landing site 1 are recorded.
FIG. 12 is an explanatory diagram illustrating an update example of the operation plan of the take-off and landing site 1 in which an operation state and the like of the take-off and landing site 1 are recorded.

FIG. 13 is a configuration diagram illustrating a take-off and landing site monitoring system according to a third embodiment.

FIG. 14 is a hardware configuration diagram illustrating hardware of a take-off and landing site monitoring device 30 according to the third embodiment.

FIG. 15 is a configuration diagram illustrating a take-off and landing site monitoring system according to a fourth embodiment.

FIG. 16 is a hardware configuration diagram illustrating hardware of a take-off and landing site monitoring device 30 according to the fourth embodiment.

FIG. 17 is a configuration diagram illustrating a take-off and landing site monitoring system according to a fifth embodiment.

FIG. 18 is a hardware configuration diagram illustrating hardware of a take-off and landing site monitoring device 30 according to the fifth embodiment.

FIG. 19 is a configuration diagram illustrating a take-off and landing site monitoring system according to a sixth embodiment.

FIG. 20 is a hardware configuration diagram illustrating hardware of a take-off and landing site monitoring device 30 according to the sixth embodiment.

DESCRIPTION OF EMBODIMENTS

Hereinafter, in order to describe the present disclosure in more detail, embodiments for carrying out the present disclosure will be described with reference to the attached drawings.

First Embodiment.

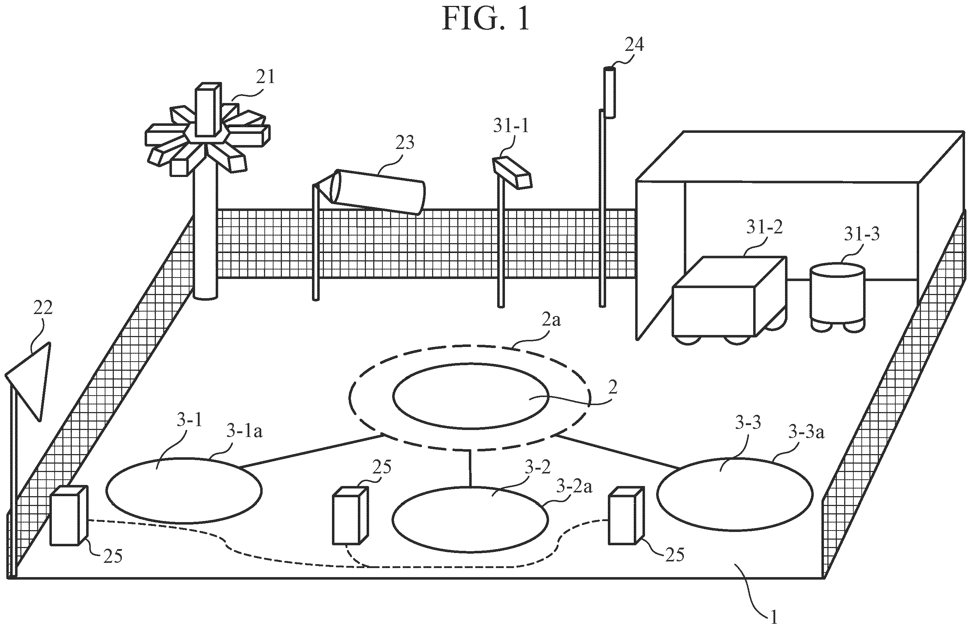

FIG. 1 is an explanatory diagram illustrating a take-off and landing site 1 to which a take-off and landing site monitoring system according to a first embodiment is applied.

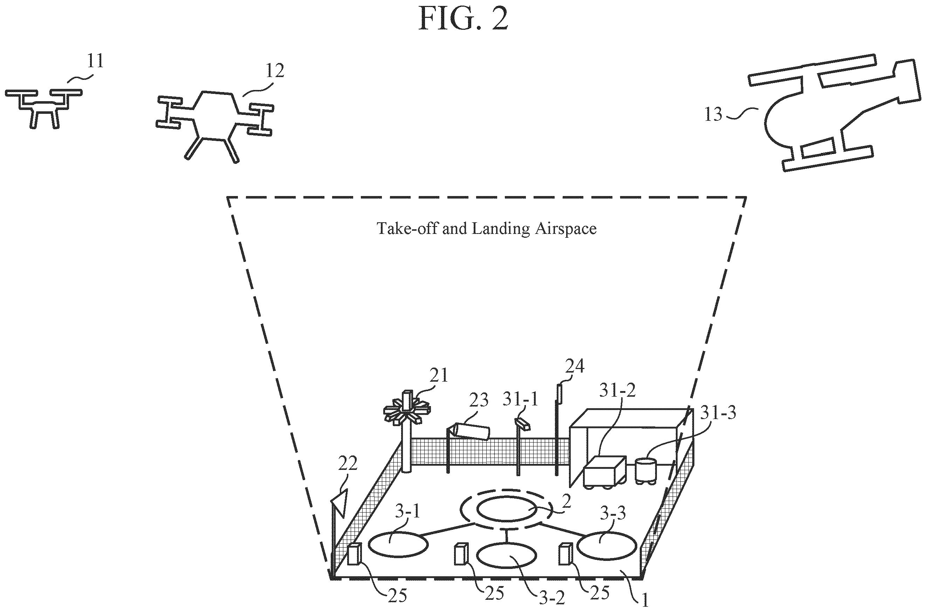

FIG. 2 is an explanatory diagram illustrating a take-off and landing airspace of a vertical take-off and landing aircraft M above the take-off and landing site 1.

The take-off and landing site 1 includes a take-off and landing place 2 where the vertical take-off and landing aircraft M can take off and land, and parking places 3-1, 3-2, and 3-3 where the vertical take-off and landing aircraft M can be parked.

Examples of the vertical take-off and landing aircraft M include a drone 11, a flying vehicle 12, and a helicopter 13.

A marking 2a indicating a take-off and landing position of the vertical take-off and landing aircraft M is applied to the take-off and landing place 2. The marking 2a is lit.

To the parking places 3-1, 3-2, and 3-3, markings 3-1a, 3-2a, and 3-3a indicating parking positions of the vertical take-off and landing aircraft M are applied, respectively. Each of the markings 3-1a, 3-2a, 3-3a is lit.

The take-off and landing site 1 illustrated in FIG. 1 includes the three parking places 3-1, 3-2, and 3-3. However, this is merely an example, and the number of parking places included in the take-off and landing site 1 may be less than three or four or more.

The imaging device 21 images the take-off and landing site 1 and outputs image data indicating a captured image of the take-off and landing site 1 to a take-off and landing site monitoring device 30. An imaging range of the imaging device 21 includes not only the site of the take-off and landing site 1 but also a take-off and landing airspace of the vertical take-off and landing aircraft M above the take-off and landing site 1.

A lighting device 22 is a lighting fixture for illuminating the take-off and landing site 1.

A windsock 23 is a windblast used to specify each of a wind direction and a wind speed at the take-off and landing site 1.

A receiver 24 receives a remote identification (ID) transmitted from the vertical take-off and landing aircraft M, and outputs the remote ID to the take-off and landing site monitoring device 30. The remote ID includes identification information of the vertical take-off and landing aircraft M, position information of the vertical take-off and landing aircraft M, and the like.

Here, the receiver 24 receives the remote ID. However, this is merely an example, and for example, when the vertical take-off and landing aircraft M is equipped with a transponder, the receiver 24 may further receive a transponder signal transmitted from the vertical take-off and landing aircraft M.

Each of obstruction removing devices 31-1, 31-2, and 31-3 is a device for removing obstruction that hinders take-off and landing of the vertical take-off and landing aircraft M. The types of obstruction that can be removed by the obstruction removing devices 31-1 to 31-3 are different from each other.

Specifically, the obstruction removing device 31-1 is a device for removing a bird that is obstruction. The obstruction removing device 31-1 removes a bird that is obstruction, for example, by emitting a loud sound, a sound, light, or an electromagnetic wave with a frequency which the bird does not like.

The obstruction removing device 31-2 is a device for extinguishing fire that is obstruction. The obstruction removing device 31-3 is a device for removing garbage that is obstruction.

The three obstruction removing devices 31-1 to 31-3 are arranged in the take-off and landing site 1 illustrated in FIG. 1. However, this is merely an example, and the number of obstruction removing devices arranged in the take-off and landing site 1 may be less than three or four or more.

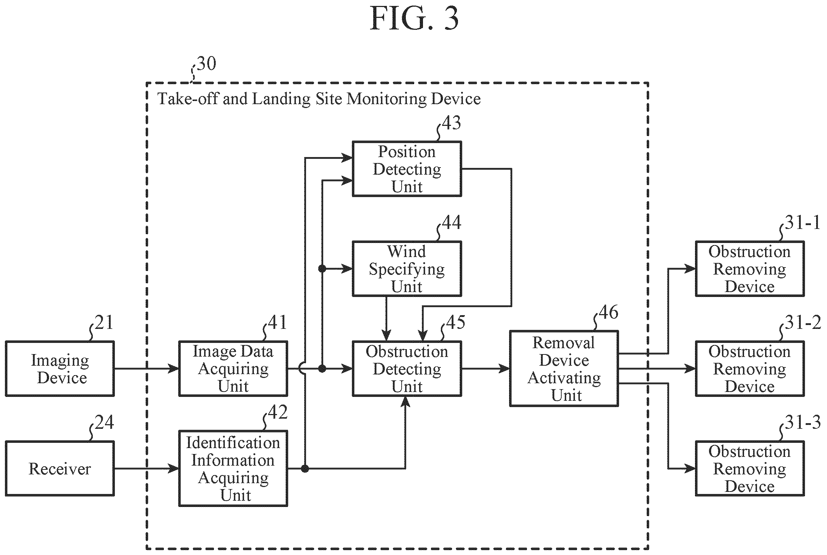

FIG. 3 is a configuration diagram illustrating a take-off and landing site monitoring system according to the first embodiment.

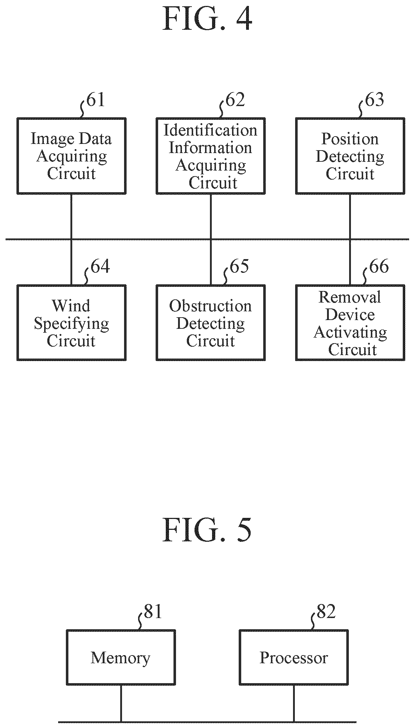

FIG. 4 is a hardware configuration diagram illustrating hardware of the take-off and landing site monitoring device 30 according to the first embodiment.

The take-off and landing site monitoring system illustrated in FIG. 3 includes the imaging device 21, the receiver 24, the take-off and landing site monitoring device 30, and the obstruction removing devices 31-1 to 31-3.

The take-off and landing site monitoring device 30 is a device that determines the type of obstruction that hinders take-off and landing of the vertical take-off and landing aircraft M using the take-off and landing site 1.

The take-off and landing site monitoring device 30 includes an image data acquiring unit 41, an identification information acquiring unit 42, a position detecting unit 43, a wind specifying unit 44, an obstruction detecting unit 45, and a removal device activating unit 46.

The image data acquiring unit 41 is implemented by, for example, an image data acquiring circuit 61 illustrated in FIG. 4.

The image data acquiring unit 41 acquires image data indicating a captured image of the take-off and landing site 1 from the imaging device 21.

The image data acquiring unit 41 outputs the image data to each of the position detecting unit 43, the wind specifying unit 44, and the obstruction detecting unit 45.

The identification information acquiring unit 42 is implemented by, for example, an identification information acquiring circuit 62 illustrated in FIG. 4.

The identification information acquiring unit 42 acquires a remote ID which is identification information of the vertical take-off and landing aircraft M from the receiver 24.

The identification information acquiring unit 42 outputs the remote ID to each of the position detecting unit 43 and the obstruction detecting unit 45.

The position detecting unit 43 is implemented by, for example, a position detecting circuit 63 illustrated in FIG. 4.

The position detecting unit 43 detects the position of the vertical take-off and landing aircraft M on the basis of the image data acquired by the image data acquiring unit 41.

The position detecting unit 43 outputs position information indicating the position of the vertical take-off and landing aircraft M to the obstruction detecting unit 45.

Here, the position detecting unit 43 detects the position of the vertical take-off and landing aircraft M on the basis of the image data. However, this is merely an example, and the position detecting unit 43 may acquire the remote ID of the vertical take-off and landing aircraft M from the identification information acquiring unit 42, and may detect the position of the vertical take-off and landing aircraft M using the image data and the position information of the vertical take-off and landing aircraft M included in the remote ID.

The wind specifying unit 44 is implemented by, for example, a wind specifying circuit 64 illustrated in FIG. 4.

The wind specifying unit 44 specifies each of a wind direction and a wind speed at the take-off and landing site 1 on the basis of the image data acquired by the image data acquiring unit 41.

The wind specifying unit 44 outputs wind information indicating each of the wind direction and the wind speed to the obstruction detecting unit 45.

The obstruction detecting unit 45 is implemented by, for example, an obstruction detecting circuit 65 illustrated in FIG. 4.

The obstruction detecting unit 45 determines the type of obstruction that hinders take-off and landing of the vertical take-off and landing aircraft M on the basis of the image data acquired by the image data acquiring unit 41.

The obstruction detecting unit 45 may determine the type of obstruction on the basis of not only the image data but also the remote ID, the position information, or the wind information.

The obstruction detecting unit 45 outputs a determination result of the obstruction type to the removal device activating unit 46.

The removal device activating unit 46 is implemented by, for example, a removal device activating circuit 66 illustrated in FIG. 4.

The removal device activating unit 46 selects an obstruction removing device used for removal of obstruction from among the obstruction removing devices 31-1 to 31-3 on the basis of the type of obstruction determined by the obstruction detecting unit 45, and activates the selected obstruction removing device.

In FIG. 4, it is assumed that each of the image data acquiring unit 41, the identification information acquiring unit 42, the position detecting unit 43, the wind specifying unit 44, the obstruction detecting unit 45, and the removal device activating unit 46, which are constituent elements of the take-off and landing site monitoring device 30, is implemented by dedicated hardware as illustrated in FIG. 4. That is, it is assumed that the take-off and landing site monitoring device 30 is implemented by the image data acquiring circuit 61, the identification information acquiring circuit 62, the position detecting circuit 63, the wind specifying circuit 64, the obstruction detecting circuit 65, and the removal device activating circuit 66.

To each of the image data acquiring circuit 61, the identification information acquiring circuit 62, the position detecting circuit 63, the wind specifying circuit 64, the obstruction detecting circuit 65, and the removal device activating circuit 66, for example, a single circuit, a composite circuit, a programmed processor, a parallel-programmed processor, an application specific integrated circuit (ASIC), a field-programmable gate array (FPGA), or a combination thereof corresponds.

The constituent elements of the take-off and landing site monitoring device 30 are not limited to those implemented by dedicated hardware, and the take-off and landing site monitoring device 30 may be implemented by software, firmware, or a combination of software and firmware.

Software or firmware is stored as a program in a memory of a computer. The computer means hardware for executing a program. To the computer, for example, a central processing unit (CPU), a central processing device, a processing device, an arithmetic device, a microprocessor, a microcomputer, a processor, or a digital signal processor (DSP) corresponds.

FIG. 5 is a hardware configuration diagram of a computer in a case where the take-off and landing site monitoring device 30 is implemented by software, firmware, or the like.

In a case where the take-off and landing site monitoring device 30 is implemented by software, firmware, or the like, a program for causing a computer to execute a processing procedure in each of the image data acquiring unit 41, the identification information acquiring unit 42, the position detecting unit 43, the wind specifying unit 44, the obstruction detecting unit 45, and the removal device activating unit 46 is stored in a memory 81. A processor 82 of the computer executes the program stored in the memory 81.

FIG. 4 illustrates an example in which each of the constituent elements of the take-off and landing site monitoring device 30 is implemented by dedicated hardware, and FIG. 5 illustrates an example in which the take-off and landing site monitoring device 30 is implemented by software, firmware, or the like. However, this is merely an example, and some of the constituent elements of the take-off and landing site monitoring device 30 may be implemented by dedicated hardware, and the remaining constituent elements may be implemented by software, firmware, or the like.

Next, an operation of the take-off and landing site monitoring system illustrated in FIG. 3 will be described.

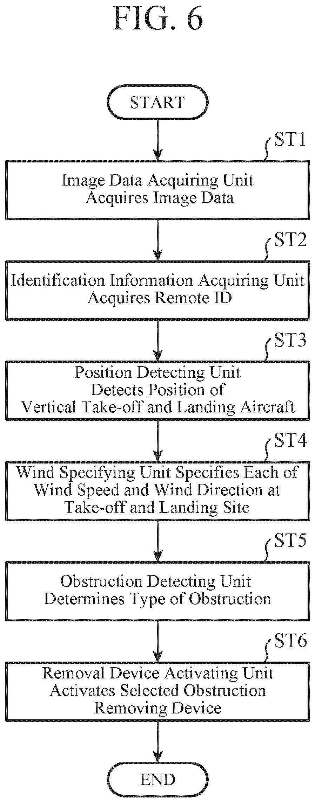

FIG. 6 is a flowchart illustrating a take-off and landing site monitoring method which is a processing procedure performed by the take-off and landing site monitoring device 30.

The imaging device 21 images the take-off and landing site 1 and outputs image data indicating a captured image of the take-off and landing site 1 to the take-off and landing site monitoring device 30.

The receiver 24 receives a remote ID transmitted from the vertical take-off and landing aircraft M, and outputs the remote ID to the take-off and landing site monitoring device 30.

The take-off and landing site monitoring device 30 acquires the image data from the imaging device 21 and acquires the remote ID from the receiver 24.

The take-off and landing site monitoring device 30 determines the type of obstruction that hinders take-off and landing of the vertical take-off and landing aircraft M on the basis of each of the image data and the remote ID.

Hereinafter, processing contents of the take-off and landing site monitoring device 30 will be specifically described.

The image data acquiring unit 41 acquires image data indicating a captured image of the take-off and landing site 1 from the imaging device 21 (step ST1 in FIG. 6).

The image data acquiring unit 41 outputs the image data to each of the position detecting unit 43, the wind specifying unit 44, and the obstruction detecting unit 45.

The identification information acquiring unit 42 acquires the remote ID from the receiver 24 (step ST2 in FIG. 6).

The identification information acquiring unit 42 outputs the remote ID to each of the position detecting unit 43 and the obstruction detecting unit 45.

The position detecting unit 43 acquires the image data from the image data acquiring unit 41.

The position detecting unit 43 detects the position of the vertical take-off and landing aircraft M on the basis of the image data (step ST3 in FIG. 6). The processing itself of detecting the position of the vertical take-off and landing aircraft M from the image data is a known technique, and for example, the position of the vertical take-off and landing aircraft M can be detected by analyzing the captured image indicated by the image data by a known method.

As described above, the position detecting unit 43 may detect the position of the vertical take-off and landing aircraft M using the image data and the position information of the vertical take-off and landing aircraft M included in the remote ID.

In the example of FIG. 2, each of the drone 11, the flying vehicle 12, and the helicopter 13 is flying as the vertical take-off and landing aircraft M, and therefore the position detecting unit 43 detects the position of each of the drone 11, the flying vehicle 12, and the helicopter 13.

When a bird appears in the captured image of the take-off and landing site 1, the position detecting unit 43 also detects the position of the bird as the vertical take-off and landing aircraft M.

The position detecting unit 43 outputs position information indicating the position of the vertical take-off and landing aircraft M to the obstruction detecting unit 45.

The wind specifying unit 44 acquires the image data from the image data acquiring unit 41.

By analyzing a captured image indicated by the image data, the wind specifying unit 44 specifies an angle $\alpha$ formed by a direction from a proximal end to a distal end of the windsock 23 appearing in the captured image and a vertical direction.

When the formed angle $\alpha$ is zero, a wind speed at the take-off and landing site 1 is substantially zero, and the wind speed at the take-off and landing site 1 increases as the formed angle $\alpha$ is closer to 90 degrees. The wind speed at the take-off and landing site 1 is generally proportional to the formed angle $\alpha$.

In an internal memory of the wind specifying unit 44, for example, a correspondence relationship between the formed angle α and the wind speed is recorded.

By referring to the correspondence relationship, the wind specifying unit 44 specifies a wind speed corresponding to the formed angle α as the wind speed at the take-off and landing site 1 (step ST4 in FIG. 6).

In addition, by analyzing the captured image indicated by the image data, the wind specifying unit 44 specifies an azimuth d, which is a direction in a horizontal plane from a proximal end to a distal end of the windsock 23, as a wind direction at the wind speed at the take-off and landing site 1 (step ST4 in FIG. 6).

The wind specifying unit 44 outputs wind information indicating each of the wind direction and the wind speed to the obstruction detecting unit 45.

Here, the wind specifying unit 44 specifies a wind speed corresponding to the formed angle α with reference to the correspondence relationship. However, this is merely an example, and the wind specifying unit 44 may calculate the wind speed by substituting the formed angle α into a mathematical expression indicating the correspondence relationship between the formed angle α and the wind speed.

In addition, the wind specifying unit 44 may give the image data to a learning model and may acquire wind information indicating each of the wind speed and the azimuth d from the learning model. Examples of the learning model include a learning model to which image data and teacher data indicating wind information are given at the time of learning, learns the wind information, and outputs the wind information corresponding to the given image data at the time of inference.

The obstruction detecting unit 45 acquires the image data from the image data acquiring unit 41 and acquires the remote ID from the identification information acquiring unit 42.

In addition, the obstruction detecting unit 45 acquires the position information from the position detecting unit 43 and acquires the wind information from the wind specifying unit 44.

The obstruction detecting unit 45 determines the type of obstruction that hinders take-off and landing of the vertical take-off and landing aircraft M on the basis of each of the image data, the remote ID, the position information, and the wind information (step ST5 in FIG. 6).

The obstruction detecting unit 45 outputs a determination result of the obstruction type to the removal device activating unit 46.

Hereinafter, processing of determining an obstruction type performed by the obstruction detecting unit 45 will be specifically described.

First, a processing procedure performed by the obstruction detecting unit 45 when "unauthorized occupation of a vertical take-off and landing aircraft", "presence of garbage", or "occurrence of fire" is recognized as the type of obstruction will be described.

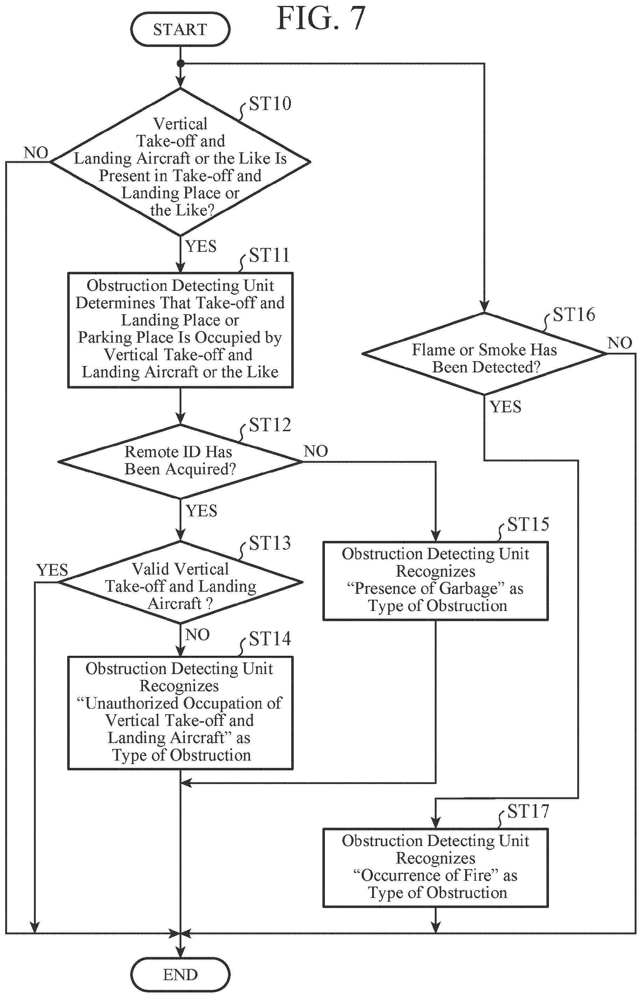

FIG. 7 is a flowchart illustrating a processing procedure when "unauthorized occupation of a vertical take-off and landing aircraft", "presence of garbage", or "occurrence of fire" is recognized as the type of obstruction detected by an obstruction detecting unit 45.

First, by analyzing the captured image indicated by the image data, the obstruction detecting unit 45 specifies an appearance of the marking 2a applied to the take-off and landing place 2 and an appearance of the marking 3-na applied to the parking place 3-n (n = 1, 2, or 3).

When the entire marking 2a appears, neither the vertical take-off and landing aircraft M nor an obstacle is present at the take-off and landing place 2. When a part or whole of the marking 2a does not appear, either the vertical take-off and landing aircraft M or an obstacle is present at the take-off and landing place 2.

If either the vertical take-off and landing place M or an obstacle is present at the take-off and landing place 2 (step ST10 in FIG. 7: YES), the obstruction detecting unit 45 determines that the take-off and landing place 2 is occupied by either the vertical take-off and landing aircraft M or an obstacle (step ST11 in FIG. 7).

If neither the vertical take-off and landing aircraft M nor an obstacle is present at the take-off and landing place 2 (step ST10 in FIG. 7: NO), the obstruction detecting unit 45 determines that the take-off and landing place 2 is occupied by neither the vertical take-off and landing aircraft M nor an obstacle.

When the entire marking 3-na appears, neither the vertical take-off and landing aircraft M nor an obstacle is present at the parking place 3-n. When a part or whole of the marking 3-na does not appear, either the vertical take-off and landing aircraft M or an obstacle is present at the parking place 3-n.

If either the vertical take-off and landing aircraft M or an obstacle is present at the parking place 3-n (step ST10 in FIG. 7: YES), the obstruction detecting unit 45 determines that the parking place 3-n is occupied by either the vertical take-off and landing aircraft M or an obstacle (step ST11 in FIG. 7).

If neither the vertical take-off and landing aircraft M nor an obstacle is present at the parking place 3-n (step ST10 in FIG. 7: NO), the obstruction detecting unit 45 determines that the parking place 3-n is occupied by neither the vertical take-off and landing aircraft M nor an obstacle.

When the take-off and landing place 2 is occupied, if an object occupying the take-off and landing place 2 is transmitting a remote ID and the identification information acquiring unit 42 has acquired the remote ID (step ST12 in FIG. 7: YES), the obstruction detecting unit 45 determines that the object occupying the take-off and landing place 2 is the vertical take-off and landing aircraft M.

Whether or not the object occupying the take-off and landing place 2 is transmitting the remote ID can be determined when the transmission position of the remote ID received by the receiver 24 is found. For example, when the receiver 24 includes a plurality of antennas, the transmission position of the remote ID can be calculated on the basis of a remote ID arriving time difference between the antennas. In addition, the obstruction detecting unit 45 can determine whether or not the object occupying the take-off and landing place 2 is transmitting the remote ID on the basis of position information of the vertical take-off and landing aircraft M included in the remote ID.

In addition to the receiver 24 disposed in the take-off and landing site 1, a receiver that receives the remote ID is disposed at the take-off and landing place 2, and a receivable range of the receiver is limited to a range including the take-off and landing place 2. In this case, the obstruction detecting unit 45 can determine whether or not the object occupying the take-off and landing place 2 is transmitting the remote ID on the basis of whether or not the receiver has received the remote ID.

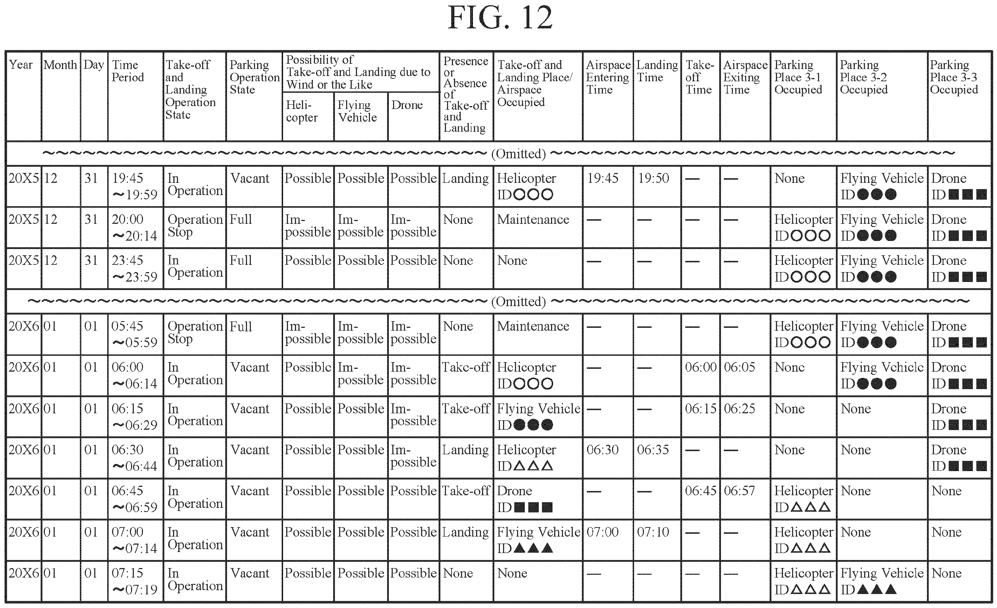

In a case where the object occupying the take-off and landing place 2 is the vertical take-off and landing aircraft M, if the vertical take-off and landing aircraft M is not a valid vertical take-off and landing aircraft M recorded in, for example, "take-off and landing place/airspace occupied" of the operation plan illustrated in FIG. 12 (ST13 in FIG. 7: NO), the obstruction detecting unit 45 recognizes "unauthorized occupation of a vertical take-off and landing aircraft" as the type of obstruction that hinders take-off and landing of the vertical take-off and landing aircraft M (step ST14 in FIG. 7).

When the parking place 3-n is occupied, if an object occupying the parking place 3-n is transmitting a remote ID and the identification information acquiring unit 42 has acquired the remote ID (step ST12 in FIG. 7: YES), the obstruction detecting unit 45 determines that the object occupying the parking place 3-n is the vertical take-off and landing aircraft M.

Whether or not the object occupying the parking place 3-n is transmitting the remote ID can be determined when the transmission position of the remote ID received by the receiver 24 is found.

In a case where the object occupying the parking place 3-n is the vertical take-off and landing aircraft M, if the vertical take-off and landing aircraft M is not a valid vertical take-off and landing aircraft M recorded in, for example, "parking place 3-n occupied" of the operation plan illustrated in FIG. 12 (ST13 in FIG. 7: NO), the obstruction detecting unit 45 recognizes "unauthorized occupation of a vertical take-off and landing aircraft" as the type of obstruction that hinders take-off and landing of the vertical take-off and landing aircraft M (step ST14 in FIG. 7).

When the take-off and landing place 2 is occupied, if the identification information acquiring unit 42 has not acquired a remote ID because an object occupying the take-off and landing place 2 is not transmitting the remote ID (step ST12 in FIG. 7: NO), the obstruction detecting unit 45 determines that the object occupying the take-off and landing place 2 is garbage.

If the object occupying the take-off and landing place 2 is garbage, the obstruction detecting unit 45 recognizes "presence of garbage" as the type of obstruction that hinders take-off and landing of the vertical take-off and landing aircraft M (step ST15 in FIG. 7).

When the parking place 3-n is occupied, if the identification information acquiring unit 42 has not acquired a remote ID because an object occupying the parking place 3-n is not transmitting the remote ID (step ST12 in FIG. 7: NO), the obstruction detecting unit 45 determines that the object occupying the parking place 3-n is garbage.

If the object occupying the parking place 3-n is garbage, the obstruction detecting unit 45 recognizes "presence of garbage" as the type of obstruction that hinders take-off and landing of the vertical take-off and landing aircraft M (step ST15 in FIG. 7).

Next, by analyzing the captured image indicated by the image data, the obstruction detecting unit 45 performs processing of detecting flame generated in the site of the take-off and landing site 1 or smoke present in the take-off and landing airspace at the take-off and landing site 1. The processing itself of detecting flame or smoke by analyzing the captured image is a known technique, and thus a detailed description thereof is omitted.

If the obstruction detecting unit 45 has detected flame or smoke (step ST16 in FIG. 7: YES), the obstruction detecting unit 45 recognizes "occurrence of fire" as the type of obstruction that hinders take-off and landing of the vertical take-off and landing aircraft M (step ST17 in FIG. 7).

In a case where neither the vertical take-off and landing aircraft M nor an obstacle is present at the take-off and landing place 2 or the like or in a case where the object occupying the take-off and landing place 2 or the like is a valid vertical take-off and landing aircraft M (step ST13 in FIG. 7: YES) and the obstruction detecting unit 45 has not detected flame or the like (step ST16 in FIG. 7: NO), the obstruction detecting unit 45 does not recognize "unauthorized occupation of a vertical take-off and landing aircraft", "presence of garbage", or "occurrence of fire" as the type of obstruction.

Next, a processing procedure performed by the obstruction detecting unit 45 when "presence of a suspicious flying object" or a "presence of a bird" is recognized as the type of obstruction will be described.

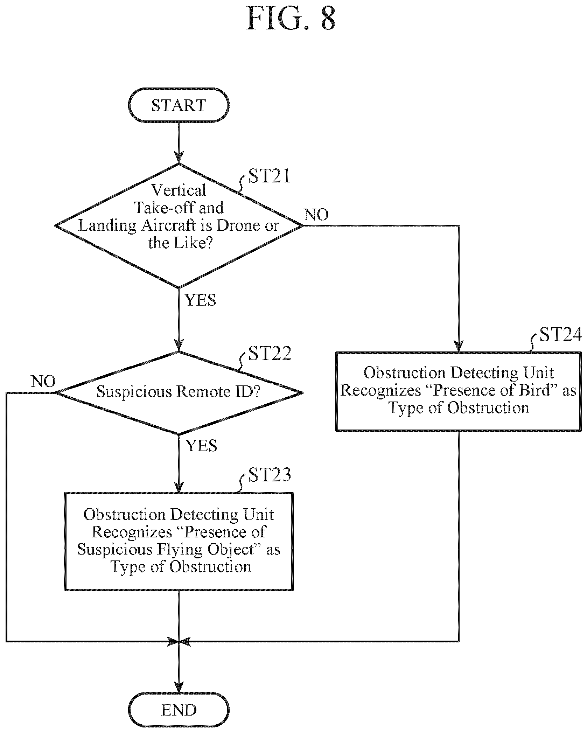

FIG. 8 is a flowchart illustrating a processing procedure when "presence of a suspicious flying object" or "presence of a bird" is recognized as the type of obstruction detected by the obstruction detecting unit 45.

The obstruction detecting unit 45 detects, for example, the drone 11, the flying vehicle 12, the helicopter 13, or a bird as the vertical take-off and landing aircraft M by analyzing the captured image indicated by the image data. The processing itself of detecting the vertical take-off and landing aircraft M is a known technique, and thus a detailed description thereof is omitted. For example, by giving the captured image to a learning model that has learned the type of the vertical take-off and landing aircraft M corresponding to the shape of the vertical take-off and landing aircraft M, the obstruction detecting unit 45 can obtain information indicating the type of the vertical take-off and landing aircraft M appearing in the captured image from the learning model.

If the detected vertical take-off and landing aircraft M is, for example, the drone 11, the flying vehicle 12, or the helicopter 13 (step ST21 in FIG. 8: YES), the obstruction detecting unit 45 determines whether or not the remote ID acquired by the identification information acquiring unit 42 is a suspicious remote ID.

For example, in a case where the remote ID acquired by the identification information acquiring unit 42 is not a remote ID of the vertical take-off and landing aircraft M recorded in the operation plan of the take-off and landing site 1 or is a remote ID of the vertical take-off and landing aircraft M of a model that cannot use the take-off and landing site 1, the obstruction detecting unit 45 determines that the remote ID is a suspicious remote ID.

If the obstruction detecting unit 45 determines that the remote ID acquired by the identification information acquiring unit 42 is a suspicious remote ID (step ST22 in FIG. 8: YES), the obstruction detecting unit 45 recognizes "presence of a suspicious flying object" as the type of obstruction (step ST23 in FIG. 8). The flying object here is a concept including an aircraft other than a vertical take-off and landing aircraft.

In the take-off and landing site monitoring system illustrated in FIG. 3, when the remote ID acquired by the identification information acquiring unit 42 is a suspicious remote ID, the obstruction detecting unit 45 recognizes "presence of a suspicious flying object" as the type of obstruction. However, this is merely an example, and when the identification information acquiring unit 42 has not acquired a remote ID because the detected drone 11, flying vehicle 12, or helicopter 13 is not transmitting the remote ID, the obstruction detecting unit 45 may recognize "presence of a suspicious flying object" as the type of obstruction.

If the detected vertical take-off and landing aircraft M is a bird (step ST21 in FIG. 8: NO), the obstruction detecting unit 45 recognizes "presence of a bird" as the type of obstruction (step ST24 in FIG. 8).

In the take-off and landing site monitoring system illustrated in FIG. 3, when the detected vertical take-off and landing aircraft M is a bird, the obstruction detecting unit 45 recognizes "presence of a bird" as the type of obstruction. Even when the detected vertical take-off and landing aircraft M is a bird, the obstruction detecting unit 45 may recognize "presence of a bird" as the type of obstruction only in a case where stay time of the bird is equal to or more than a stay time determining threshold. The stay time determining threshold may be stored in an internal memory of the obstruction detecting unit 45 or may be given from the outside of the take-off and landing site monitoring device 30.

If the remote ID acquired by the identification information acquiring unit 42 is not a suspicious remote ID (step ST22 in FIG. 8: NO), the obstruction detecting unit 45 does not recognize "presence of a suspicious flying object" or "presence of a bird" as the type of obstruction.

Next, a processing procedure performed by the obstruction detecting unit 45 when recognizing "strong wind" as the type of obstruction will be described.

The obstruction detecting unit 45 acquires wind information from the wind specifying unit 44.

The obstruction detecting unit 45 accumulates the acquired wind information and calculates an average wind speed $V_{ave}$ and a maximum wind speed $v_{max}$ from a certain time before the present to the present.

In a case where the average wind speed $v_{ave}$ is larger than a threshold $vth_{ave}$ indicating an abnormal average wind speed or in a case where the maximum wind speed $v_{max}$ is larger than a threshold $vth_{max}$ indicating an abnormal maximum wind speed, the obstruction detecting unit 45 recognizes "strong wind" as the type of obstruction.

In a case where the average wind speed $v_{ave}$ is equal to or less than the threshold $vth_{ave}$ and the maximum wind speed $v_{max}$ is equal to or less than the threshold $vth_{max}$, the obstruction detecting unit 45 does not recognize "strong wind" as the type of obstruction.

Each of the threshold $vth_{ave}$ and the threshold $vth_{max}$ may be stored in an internal memory of the obstruction detecting unit 45 or may be given from the outside of the take-off and landing site monitoring device 30.

Each of the threshold $vth_{ave}$ and the threshold $vth_{max}$ may vary depending on a wind direction at the take-off and landing site 1.

In the internal memory of the removal device activating unit 46, a correspondence relationship between the type of obstruction and an obstruction removing device is described as follows.

Type of obstruction Obstruction removing device
"Unauthorized occupation of a vertical take-off and landing aircraft" → none
"Presence of garbage" → Obstruction removing device 31-3
"Occurrence of fire" → Obstruction removing device 31-2
"Presence of a suspicious flying object" → none
"Presence of a bird" → Obstruction removing device 31-1
"Strong wind" → none

The removal device activating unit 46 selects an obstruction removing device used for removal of obstruction from among the obstruction removing devices 31-1 to 31-3 on the basis of the type of obstruction determined by the obstruction detecting unit 45.

That is, the removal device activating unit 46 selects the obstruction removing device 31-3 when the type of obstruction is "presence of garbage", selects the obstruction removing device 31-2 when the type of obstruction is "occurrence of fire", and selects the obstruction removing device 31-1 when the type of obstruction is "presence of a bird".

The removal device activating unit 46 activates the selected obstruction removing device (step ST6 in FIG. 6).

Note that, in a case where the type of obstruction is "unauthorized occupation of a vertical take-off and landing aircraft", "presence of a suspicious flying object", or "strong wind", there is no obstruction removing device capable of removing the obstruction among the obstruction removing devices 31-1 to 31-3. Therefore, the removal device activating unit 46 transmits a message indicating the type of obstruction to, for example, a server device of a management company of the take-off and landing site 1.

In the above first embodiment, the take-off and landing site monitoring device 30 is configured to include: the image data acquiring unit 41 that acquires image data indicating a captured image of the take-off and landing site 1 from the imaging device 21 that images the take-off and landing site 1; and the obstruction detecting unit 45 that determines the type of obstruction that hinders take-off and landing of a vertical take-off and landing aircraft using the take-off and landing site 1 on the basis of the image data acquired by the image data acquiring unit 41. Therefore, the take-off and landing site monitoring device 30 can specify the type of obstruction that hinders take-off and landing of a vertical take-off and landing aircraft.

In addition, in the first embodiment, the take-off and landing site monitoring device 30 is configured to include the removal device activating unit 46 that selects an obstruction removing device used for removal of obstruction from among the plurality of obstruction removing devices 31-1 to 31-3 whose types of obstruction to be removed are different from each other on the basis of the type of obstruction determined by the obstruction detecting unit 45, and activates the selected obstruction removing device. Therefore, with the take-off and landing site monitoring device 30, for example, a worker of a management company of the take-off and landing site 1 may be able to remove obstruction without performing work for removing the obstruction.

Second Embodiment.

In a second embodiment, a take-off and landing site monitoring device 30 including an operation planning unit 50 that creates an operation plan of a take-off and landing site or updates the operation plan will be described.

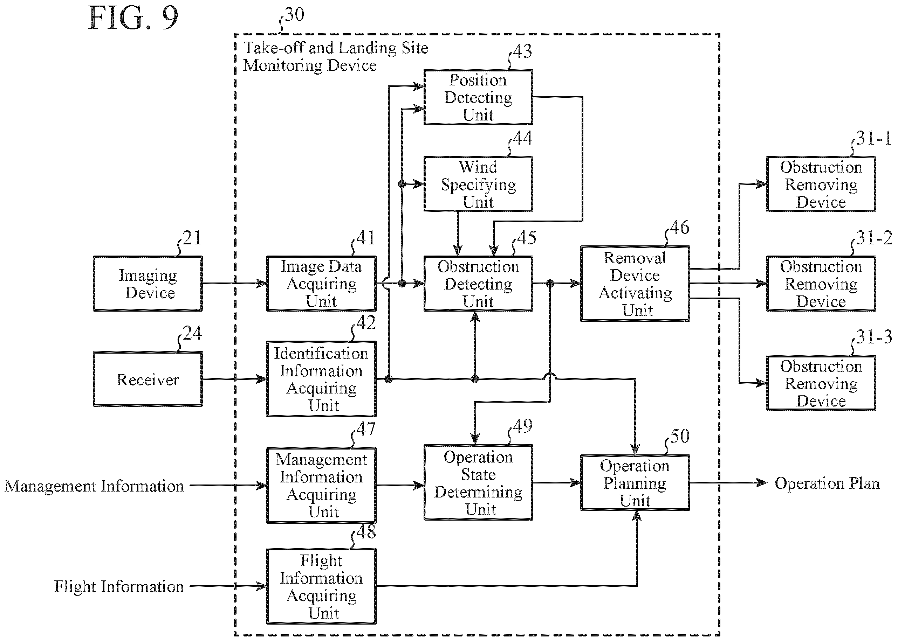

FIG. 9 is a configuration diagram illustrating a take-off and landing site monitoring system according to the second embodiment. In FIG. 9, the same reference numerals as in FIG. 3 indicate the same or corresponding parts, and therefore description thereof is omitted.

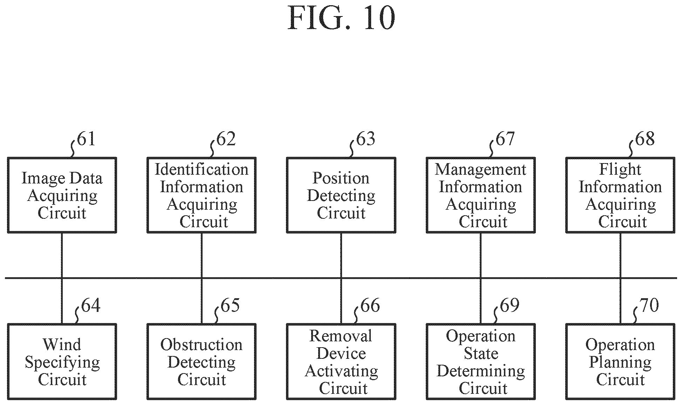

FIG. 10 is a hardware configuration diagram illustrating hardware of the take-off and landing site monitoring device 30 according to the second embodiment. In FIG. 10, the same reference numerals as in FIG. 4 indicate the same or corresponding parts, and therefore description thereof is omitted.

The take-off and landing site monitoring device 30 illustrated in FIG. 10 includes an image data acquiring unit 41, an identification information acquiring unit 42, a position detecting unit 43, a wind specifying unit 44, an obstruction detecting unit 45, and a removal device activating unit 46.

In addition, the take-off and landing site monitoring device 30 illustrated in FIG. 10 includes a management information acquiring unit 47, a flight information acquiring unit 48, an operation state determining unit 49, and the operation planning unit 50.

The management information acquiring unit 47 is implemented by, for example, a management information acquiring circuit 67 illustrated in FIG. 10.

The management information acquiring unit 47 acquires management information indicating maintenance of a take-off and landing site 1 from, for example, a server device of a management company of the take-off and landing site 1.

The management information acquiring unit 47 outputs the management information to the operation state determining unit 49.

The flight information acquiring unit 48 is implemented by, for example, a flight information acquiring circuit 68 illustrated in FIG. 10.

The flight information acquiring unit 48 acquires flight information of a vertical take-off and landing aircraft M from, for example, a server device of an operation company of the vertical take-off and landing aircraft M.

The flight information acquiring unit 48 outputs the flight information of the vertical take-off and landing aircraft M to the operation planning unit 50.

The operation state determining unit 49 is implemented by, for example, an operation state determining circuit 69 illustrated in FIG. 10.

The operation state determining unit 49 determines an operation state of the take-off and landing site 1 on the basis of a determination result of the obstruction type determined by the obstruction detecting unit 45.

The operation state determining unit 49 may determine the operation state of the take-off and landing site 1 on the basis of not only the determination result of the obstruction type but also the management information.

The operation planning unit 50 is implemented by, for example, an operation planning circuit 70 illustrated in FIG. 10.

The operation planning unit 50 creates an operation plan of the take-off and landing site 1 on the basis of the operation state of the take-off and landing site 1 determined by the operation state determining unit 49.

In addition, the operation planning unit 50 updates the operation plan on the basis of the operation state of the take-off and landing site 1 and each of a remote ID which is identification information acquired by the identification information acquiring unit 42 and the flight information of the vertical take-off and landing aircraft M.

In FIG. 9, it is assumed that each of the image data acquiring unit 41, the identification information acquiring unit 42, the position detecting unit 43, the wind specifying unit 44, the obstruction detecting unit 45, the removal device activating unit 46, the management information acquiring unit 47, the flight information acquiring unit 48, the operation state determining unit 49, and the operation planning unit 50, which are constituent elements of the take-off and landing site monitoring device 30, is implemented by dedicated hardware as illustrated in FIG. 10. That is, it is assumed that the take-off and landing site monitoring device 30 is implemented by the image data acquiring circuit 61, the identification information acquiring circuit 62, the position detecting circuit 63, the wind specifying circuit 64, the obstruction detecting circuit 65, the removal device activating circuit 66, the management information acquiring circuit 67, the flight information acquiring circuit 68, the operation state determining circuit 69, and the operation planning circuit 70.

To each of the image data acquiring circuit 61, the identification information acquiring circuit 62, the position detecting circuit 63, the wind specifying circuit 64, the obstruction detecting circuit 65, the removal device activating circuit 66, the management information acquiring circuit 67, the flight information acquiring circuit 68, the operation state determining circuit 69, and the operation planning circuit 70, for example, a single circuit, a composite circuit, a programmed processor, a parallel-programmed processor, ASIC, FPGA, or a combination thereof corresponds.

The constituent elements of the take-off and landing site monitoring device 30 are not limited to those implemented by dedicated hardware, and the take-off and landing site monitoring device 30 may be implemented by software, firmware, or a combination of software and firmware.

In a case where the take-off and landing site monitoring device 30 is implemented by software, firmware, or the like, a program for causing a computer to execute a processing procedure in each of the image data acquiring unit 41, the identification information acquiring unit 42, the position detecting unit 43, the wind specifying unit 44, the obstruction detecting unit 45, the removal device activating unit 46, the management information acquiring unit 47, the flight information acquiring unit 48, the operation state determining unit 49, and the operation planning unit 50 is stored in a memory 81 illustrated in FIG. 5. A processor 82 illustrated in FIG. 5 executes the program stored in the memory 81.

FIG. 10 illustrates an example in which each of the constituent elements of the take-off and landing site monitoring device 30 is implemented by dedicated hardware, and FIG. 5 illustrates an example in which the take-off and landing site monitoring device 30 is implemented by software, firmware, or the like. However, this is merely an example, and some of the constituent elements of the take-off and landing site monitoring device 30 may be implemented by dedicated hardware, and the remaining constituent elements may be implemented by software, firmware, or the like.

Next, an operation of the take-off and landing site monitoring system illustrated in FIG. 9 will be described. The operation of the take-off and landing site monitoring system illustrated in FIG. 9 is similar to that of the take-off and landing site monitoring system illustrated in FIG. 3 except for the management information acquiring unit 47, the flight information acquiring unit 48, the operation state determining unit 49, and the operation planning unit 50. Therefore, here, operations of the management information acquiring unit 47, the flight information acquiring unit 48, the operation state determining unit 49, and the operation planning unit 50 will be mainly described.

The management information acquiring unit 47 acquires management information indicating maintenance of a take-off and landing site 1 from, for example, a server device of a management company of the take-off and landing site 1.

The management information indicating maintenance includes, for example, information indicating a time period in which maintenance is performed and information indicating a place where maintenance is performed. Examples of the place where maintenance is performed include a take-off and landing place 2, a parking place 3-1, a parking place 3-2, and a parking place 3-3.

The management information acquiring unit 47 outputs the management information to the operation state determining unit 49.

The flight information acquiring unit 48 acquires flight information of a vertical take-off and landing aircraft M from, for example, a server device of an operation company of the vertical take-off and landing aircraft M.

The flight information of the vertical take-off and landing aircraft M includes, for example, information indicating a passing route of the vertical take-off and landing aircraft M, information indicating a passing time of the vertical take-off and landing aircraft M, information indicating a landing time on the take-off and landing site 1, information indicating a stay time at the take-off and landing site 1, and information indicating a takeoff time from the take-off and landing site 1.

The flight information acquiring unit 48 outputs the flight information of the vertical take-off and landing aircraft M to the operation planning unit 50.

The obstruction detecting unit 45 outputs a determination result of the obstruction type to the removal device activating unit 46 and outputs the determination result of the obstruction type to the operation state determining unit 49.

The operation state determining unit 49 acquires the determination result of the obstruction type from the obstruction detecting unit 45, and acquires the management information from the management information acquiring unit 47.

The operation state determining unit 49 determines an operation state of the take-off and landing site 1 on the basis of the determination result of the obstruction type and the management information.

Hereinafter, processing of determining an operation state performed by the operation state determining unit 49 will be specifically described.

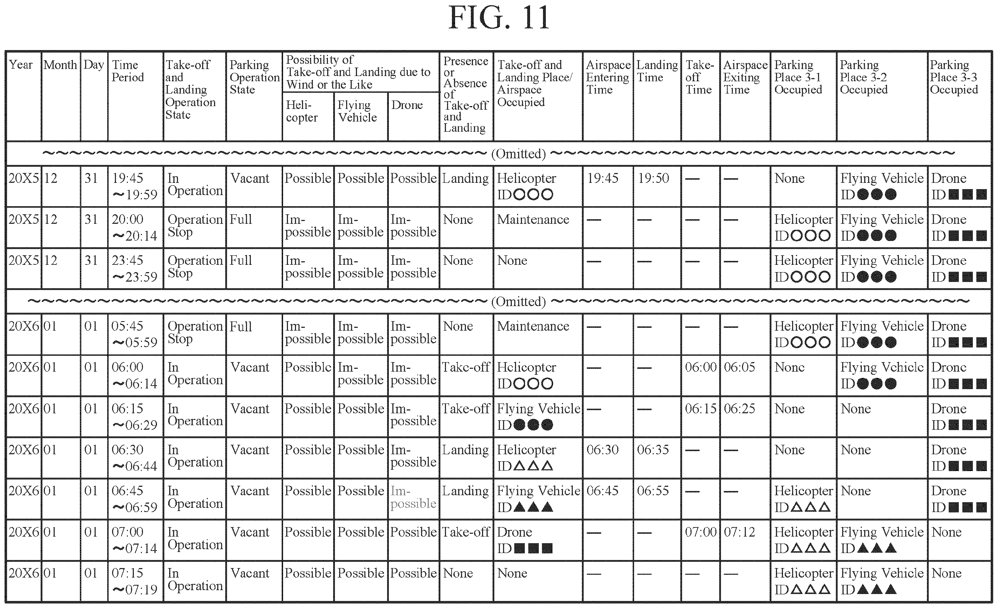

FIG. 11 is an explanatory diagram illustrating an operation plan of the take-off and landing site 1 in which an operation state and the like of the take-off and landing site 1 are recorded.

In FIG. 11, "take-off and landing operation state" is an operation state of the take-off and landing place 2. "In operation" indicates that the take-off and landing place 2 can be operated. "Operation stop" indicates that an operation of the take-off and landing place 2 is stopped.

"Parking operation state" indicates that the parking places 3-1 to 3-3 are operated. "Vacant" indicates that a new vertical take-off and landing aircraft M can be parked in any one of the parking places 3-1 to 3-3. "Full" indicates that the vertical take-off and landing aircraft M is parked in each of the parking places 3-1 to 3-3. A state where operation states of the parking places 3-1 to 3-3 are in "operation stop" is a state where an operation of each of the parking places 3-1 to 3-3 is stopped, and "full" is written also in this case.

"Possibility of take-off and landing due to wind or the like" indicates whether or not each of the drone 11, the flying vehicle 12, and the helicopter 13 can take off and land. "Possible" indicates a state where take-off and landing can be performed. "Impossible" indicates a state where take-off and landing cannot be performed due to obstruction such as wind.

"Presence or absence of take-off and landing" indicates whether the take-off and landing place 2 is used for either takeoff or landing or unused.

"Take-off and landing place/airspace occupied" indicates a remote ID of a vertical take-off and landing aircraft M occupying the take-off and landing place 2 or a remote ID of a vertical take-off and landing aircraft M occupying the take-off and landing airspace.

When "maintenance" is recorded in "take-off and landing place/airspace occupied", this indicates that the take-off and landing place 2 is under maintenance.

"Parking place 3-n (n = 1, 2, or 3) occupied" indicates a remote ID of a vertical take-off and landing aircraft M occupying the parking place 3-n. In "parking place 3-n occupied", "none" indicates that there is no vertical take-off and landing aircraft M occupying the parking place 3-n.

In a case where the determination result of the obstruction type indicates "unauthorized occupation of a vertical take-off and landing aircraft" or "presence of garbage" for the take-off and landing place 2, the operation state determining unit 49 determines the operation state of the take-off and landing place 2 in the take-off and landing site 1 as "operation stop".

In a case where the determination result of the obstruction type indicates "unauthorized occupation of a vertical take-off and landing aircraft" or "presence of garbage" for the parking place 3-n (n=1, 2, or 3), the operation state determining unit 49 determines the operation state of the parking place 3-n in the take-off and landing site 1 as "operation stop".

In a case where the determination result of the obstruction type indicates "occurrence of fire", the operation state determining unit 49 determines the operation state of the take-off and landing site 1 as "operation stop".

In a case where the determination result of the obstruction type indicates "presence of a suspicious flying object" or "presence of a bird", the operation state determining unit 49 determines the operation state of the take-off and landing site 1 as "operation stop".

In a case where the determination result of the obstruction type indicates "strong wind", the operation state determining unit 49 determines the operation state of the take-off and landing place 2 in the take-off and landing site 1 as "operation stop".

When the management information indicates maintenance of the take-off and landing place 2, the operation state determining unit 49 determines the operation state of the take-off and landing place 2 as "operation stop" in a time period during which maintenance is performed.

When the management information indicates maintenance of the parking place 3-n, the operation state determining unit 49 determines the operation state of the parking place 3-n as "operation stop" in a time period during which maintenance is performed.

The operation planning unit 50 creates an operation plan of the take-off and landing site 1 on the basis of the operation state of the take-off and landing site 1 determined by the operation state determining unit 19.

Hereinafter, processing of creating the operation plan performed by the operation planning unit 50 will be specifically described.

In a case where the operation state determining unit 19 has determined the operation state of the take-off and landing place 2 as "operation stop", the operation planning unit 50 records "operation stop" in "take-off and landing operation state" in the operation plan illustrated in FIG. 11, for example. In addition, in a case where the operation state determining unit 19 has determined the operation state of the take-off and landing site 1 as "operation stop", the operation planning unit 50 records "operation stop" in "take-off and landing operation state" in the operation plan illustrated in FIG. 11, for example.

In the operation plan illustrated in FIG. 11, for example, "operation stop" is recorded in a time period of 20:00 to 20:14 on December 31, 20X5.

When the operation state determining unit 19 has not determined the operation state of the take-off and landing place 2 as "operation stop", the operation planning unit 50 records "in operation" in "take-off and landing operation state" in the operation plan illustrated in FIG. 11, for example.

In the operation plan illustrated in FIG. 11, for example, "in operation" is recorded in a time period of 19:45 to 19:59 on December 31, 20X5.

In a case where the operation state determining unit 19 has determined the operation state of the parking place 3-n as "operation stop", the operation planning unit 50 records "full" in "parking operation state" in the operation plan illustrated in FIG. 11, for example.

In the operation plan illustrated in FIG. 11, for example, "full" is recorded in a time period of 5:45 to 5:59 on January 1, 20X6.

When the operation state determining unit 19 has not determined the operation state of the parking place 3-n as "operation stop", the operation planning unit 50 records "vacant" in "parking operation state" in the operation plan illustrated in FIG. 11, for example. Note that when a vertical take-off and landing aircraft M is parked in each of the parking places 3-1 to 3-3, the operation planning unit 50 records "full".

When the operation state of the take-off and landing place 2 is determined as "operation stop" because the type of obstruction is "strong wind", the operation planning unit 50 records "impossible" in "possibility of take-off and landing due to wind or the like" in the operation plan illustrated in FIG. 11, for example. "Impossible" means "operation stop".

In the operation plan illustrated in FIG. 11, for example, "impossible" is recorded in a time period of 20:00 to 20:14 on December 31, 20X5.

Here, when the operation state of the take-off and landing place 2 has been determined as "operation stop", "impossible" is recorded for each of the drone 11, the flying vehicle 12, and the helicopter 13. However, even when take-off and landing of each of the drone 11 and the flying vehicle 12 are difficult due to strong wind, take-off and landing of the helicopter 13 may be possible. In such a case, the operation planning unit 50 may record "possible" in "possibility of take-off and landing due to wind or the like" for the helicopter 13, and may record "impossible" in "possibility of take-off and landing due to wind or the like" for each of the drone 11 and the flying vehicle 12.

The obstruction detecting unit 45 can determine whether or not there is obstruction of "strong wind" for each type of vertical take-off and landing aircraft M by using a threshold that varies depending on the type of vertical take-off and landing aircraft M for a threshold $vth_{ave}$ indicating an abnormal average wind speed and a threshold $vth_{max}$ indicating an abnormal maximum wind speed.

The operation plan illustrated in FIG. 11 includes various items in addition to the items of "take-off and landing operation state", "parking operation state", and "possibility of take-off and landing due to wind or the like". The operation planning unit 50 also performs record in the various items, but this record itself is similar to record of a general operation plan, and thus detailed description thereof is omitted.

After creating the operation plan, the operation planning unit 50 updates the operation plan of the take-off and landing site 1 on the basis of the operation state of the take-off and landing site 1 and each of the remote ID and the flight information of the vertical take-off and landing aircraft M.

Hereinafter, processing of updating the operation plan performed by the operation planning unit 50 will be specifically described.

FIG. 12 is an explanatory diagram illustrating an update example of the operation plan of the take-off and landing site 1 in which an operation state and the like of the take-off and landing site 1 are recorded.

When the operation state determining unit 19 changes the operation state of the take-off and landing place 2 from "in operation" to "operation stop", the operation planning unit 50 changes "take-off and landing operation state" in the operation plan from "in operation" to "operation stop".

In addition, when the operation state determining unit 19 changes the operation state of the take-off and landing place 2 from "operation stop" to "in operation", the operation planning unit 50 changes "take-off and landing operation state" in the operation plan from "operation stop" to "in operation".

In the operation plan illustrated in FIG. 12, for example, the record in a time period of 23:45 to 23:59 on December 31, 20X5 is changed from "operation stop" to "in operation".

On the basis of the type of vertical take-off and landing aircraft M indicated by the remote ID, the operation planning unit 50 specifies, for example, an appropriate temporal interval with a vertical take-off and landing aircraft M that has taken off and landed immediately before the vertical take-off and landing aircraft M or an appropriate temporal interval with a vertical take-off and landing aircraft M that will take off and land immediately after the vertical take-off and landing aircraft M. The appropriate temporal interval is a temporal interval until the next vertical take-off and landing aircraft M can safely take off and land because wind is generated at the take-off and landing place 2 along with take-off and landing of the vertical take-off and landing aircraft M. This temporal interval varies depending on the type of vertical take-off and landing aircraft M. Since the processing itself of specifying the appropriate temporal interval is a known technique, detailed description thereof is omitted.

The operation planning unit 50 specifies a current temporal interval on the basis of flight information of a plurality of vertical take-off and landing aircrafts M using the take-off and landing site 1.

When the specified current temporal interval is shorter than the appropriate temporal interval, the operation planning unit 50 changes the operation plan in such a manner that the current temporal interval is the appropriate temporal interval.

At this time, in addition to a method for changing the operation plan by delaying a take-off and landing time of a vertical take-off and landing aircraft M to take off and land later, there is a method for changing the operation plan by changing the take-off and landing order of a vertical take-off and landing aircraft M to take off and land earlier and a vertical take-off and landing aircraft M to take off and land later. Even when the current temporal interval is not changed, the appropriate time interval may be maintained by changing the take-off and landing order. As the method for changing the operation plan by changing the take-off and landing order, a general scheduling method for an airplane can be used.

In the examples of the operation plans illustrated in FIGS. 11 and 12, the take-off and landing order of a vertical take-off and landing aircraft M in a time period of 6:45 to 6:59 on January 1, 20X6 and a vertical take-off and landing aircraft M in a time period of 7:00 to 7:14 on January 1, 20X6 is changed.

That is, in the operation plan illustrated in FIG. 11, the vertical take-off and landing aircraft M in the time period of 6:45 to 6:59 on January 1, 20X6 is a flying vehicle, and in the operation plan illustrated in FIG. 12, the vertical take-off and landing aircraft M in the time period of 6:45 to 6:59 on January 1, 20X6 is a drone.

In addition, in the operation plan illustrated in FIG. 11, the vertical take-off and landing aircraft M in the time period of 7:00 to 7:14 on January 1, 20X6 is a drone, and in the operation plan illustrated in FIG. 12, the vertical take-off and landing aircraft M in the time period of 7:00 to 7:14 on January 1, 20X6 is a flying vehicle.

In the above second embodiment, the take-off and landing site monitoring device 30 illustrated in FIG. 9 is configured to include the operation planning unit 50 that creates or updates the operation plan of the take-off and landing site 1 on the basis of the operation state of the take-off and landing site 1 determined by the operation state determining unit 49. Therefore, similarly to the take-off and landing site monitoring device 30 illustrated in FIG. 3, the take-off and landing site monitoring device 30 illustrated in FIG. 9 can specify the type of obstruction that hinders take-off and landing of a vertical take-off and landing aircraft, and can automatically obtain the operation plan of the take-off and landing site 1.

Third Embodiment.

In a third embodiment, a take-off and landing site monitoring device 30 including a charging management unit 52 that calculates a usage fee of a vertical take-off and landing aircraft M for a take-off and landing site 1 will be described.

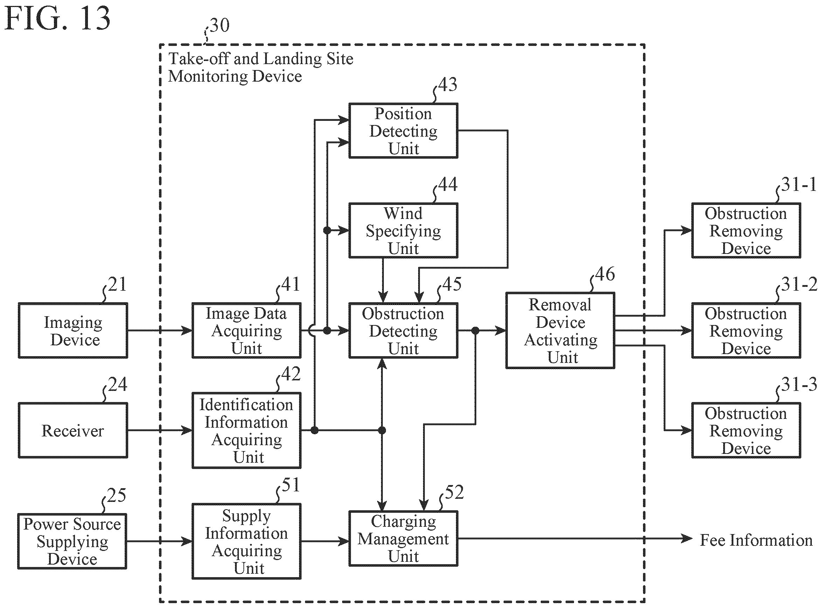

FIG. 13 is a configuration diagram illustrating a take-off and landing site monitoring system according to the third embodiment. In FIG. 13, the same reference numerals as in FIGS. 3 and 9 indicate the same or corresponding parts, and therefore description thereof is omitted.

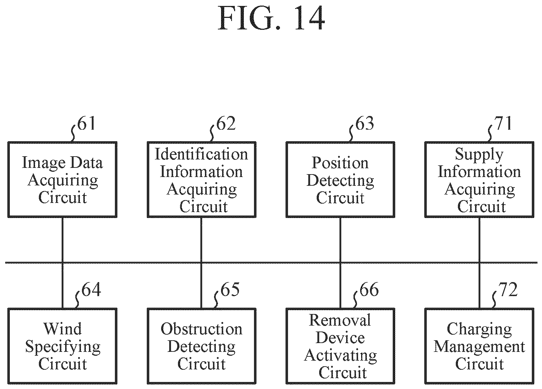

FIG. 14 is a hardware configuration diagram illustrating hardware of the take-off and landing site monitoring device 30 according to the third embodiment. In FIG. 14, the same reference numerals as in FIGS. 4 and 10 indicate the same or corresponding parts, and therefore description thereof is omitted.

The take-off and landing site monitoring device 30 illustrated in FIG. 13 includes an image data acquiring unit 41, an identification information acquiring unit 42, a position detecting unit 43, a wind specifying unit 44, an obstruction detecting unit 45, and a removal device activating unit 46.

In addition, the take-off and landing site monitoring device 30 illustrated in FIG. 13 includes a supply information acquiring unit 51 and the charging management unit 52.

In the take-off and landing site monitoring device 30 illustrated in FIG. 13, the supply information acquiring unit 51 and the charging management unit 52 are applied to the take-off and landing site monitoring device 30 illustrated in FIG. 3. However, this is merely an example, and the supply information acquiring unit 51 and the charging management unit 52 may be applied to the take-off and landing site monitoring device 30 illustrated in FIG. 9.

A power source supplying device 25 is a device for supplying fuel to a vertical take-off and landing aircraft M or charging the vertical take-off and landing aircraft M.

The power source supplying device 25 outputs supply information indicating a fuel supply amount to the vertical take-off and landing aircraft M or a charge amount to the vertical take-off and landing aircraft M to the take-off and landing site monitoring device 30.

The supply information acquiring unit 51 is implemented by, for example, a supply information acquiring circuit 71 illustrated in FIG. 14.

The supply information acquiring unit 51 acquires, from the power source supplying device 25, supply information indicating a fuel supply amount to the vertical take-off and landing aircraft M or a charge amount to the vertical take-off and landing aircraft M.

The supply information acquiring unit 51 outputs the supply information to the charging management unit 52.

The charging management unit 52 is implemented by, for example, a charging management circuit 72 illustrated in FIG. 14.

The charging management unit 52 calculates a usage fee of the vertical take-off and landing aircraft M for the take-off and landing site 1 on the basis of a determination result of an occupation state determined by the obstruction detecting unit 45 and a remote ID which is identification information acquired by the identification information acquiring unit 42. The determination result of the occupation state determined by the obstruction detecting unit 45 indicates whether or not the vertical take-off and landing aircraft M occupies the take-off and landing place 2 or whether or not the vertical take-off and landing aircraft M occupies the parking place 3-n (n = 1, 2, or 3).

The charging management unit 52 may calculate the usage fee of the vertical take-off and landing aircraft M for the take-off and landing site 1 on the basis of not only the determination result of the occupation state determined by the obstruction detecting unit 45 and the remote ID but also the supply information acquired by the supply information acquiring unit 51.

The charging management unit 52 transmits fee information indicating the usage fee of the vertical take-off and landing aircraft M to, for example, a server device of a management company of the take-off and landing site 1.

In FIG. 13, it is assumed that each of the image data acquiring unit 41, the identification information acquiring unit 42, the position detecting unit 43, the wind specifying unit 44, the obstruction detecting unit 45, and the removal device activating unit 46, the supply information acquiring unit 51, and the charging management unit 52, which are constituent elements of the take-off and landing site monitoring device 30, is implemented by dedicated hardware as illustrated in FIG. 14. That is, it is assumed that the take-off and landing site monitoring device 30 is implemented by the image data acquiring circuit 61, the identification information acquiring circuit 62, the position detecting circuit 63, the wind specifying circuit 64, the obstruction detecting circuit 65, the removal device activating circuit 66, the supply information acquiring circuit 71, and the charging management circuit 72.

To each of the image data acquiring circuit 61, the identification information acquiring circuit 62, the position detecting circuit 63, the wind specifying circuit 64, the obstruction detecting circuit 65, the removal device activating circuit 66, the supply information acquiring circuit 71, and the charging management circuit 72, for example, a single circuit, a composite circuit, a programmed processor, a parallel-programmed processor, ASIC, FPGA, or a combination thereof corresponds.

The constituent elements of the take-off and landing site monitoring device 30 are not limited to those implemented by dedicated hardware, and the take-off and landing site monitoring device 30 may be implemented by software, firmware, or a combination of software and firmware.

In a case where the take-off and landing site monitoring device 30 is implemented by software, firmware, or the like, a program for causing a computer to execute a processing procedure in each of the image data acquiring unit 41, the identification information acquiring unit 42, the position detecting unit 43, the wind specifying unit 44, the obstruction detecting unit 45, and the removal device activating unit 46, the supply information acquiring unit 51, and the charging management unit 52 is stored in a memory 81 illustrated in FIG. 5. A processor 82 illustrated in FIG. 5 executes the program stored in the memory 81.

FIG. 14 illustrates an example in which each of the constituent elements of the take-off and landing site monitoring device 30 is implemented by dedicated hardware, and FIG. 5 illustrates an example in which the take-off and landing site monitoring device 30 is implemented by software, firmware, or the like. However, this is merely an example, and some of the constituent elements of the take-off and landing site monitoring device 30 may be implemented by dedicated hardware, and the remaining constituent elements may be implemented by software, firmware, or the like.

Next, an operation of the take-off and landing site monitoring system illustrated in FIG. 13 will be described. The operation of the take-off and landing site monitoring system illustrated in FIG. 13 is similar to that of the take-off and landing site monitoring system illustrated in FIG. 3 except for the supply information acquiring unit 51 and the charging management unit 52. Therefore, here, operations of the supply information acquiring unit 51 and the charging management unit 52 will be mainly described.

When the vertical take-off and landing aircraft M is present in the take-off and landing site 1, the vertical take-off and landing aircraft M may receive supply of fuel for moving an engine from the power source supplying device 25.

In addition, when the vertical take-off and landing aircraft M is present in the take-off and landing site 1, the vertical take-off and landing aircraft M may receive charge of a battery from the power source supplying device 25.

When supplying fuel to the vertical take-off and landing aircraft M, the power source supplying device 25 transmits supply information indicating a fuel supply amount to the take-off and landing site monitoring device 30.

When charging a battery of the vertical take-off and landing aircraft M, the power source supplying device 25 outputs supply information indicating a charge amount to the take-off and landing site monitoring device 30.

The supply information acquiring unit 51 acquires the supply information from the power source supplying device 25 and outputs the supply information to the charging management unit 52.

The charging management unit 52 acquires, from the obstruction detecting unit 45, a determination result indicating whether or not the vertical take-off and landing aircraft M occupies the take-off and landing place 2 or whether or not the vertical take-off and landing aircraft M occupies the parking place 3-n (n = 1, 2, or 3).

In addition, the charging management unit 52 acquires the remote ID from the identification information acquiring unit 42 and acquires the supply information from the power source supplying device 25.

When the vertical take-off and landing aircraft M occupies the take-off and landing place 2, a usage fee corresponding to a time during which the vertical take-off and landing aircraft M occupies the take-off and landing place 2 is charged.

In addition, when the vertical take-off and landing aircraft M occupies the parking place 3-n, a usage fee corresponding to a time during which the vertical take-off and landing aircraft M occupies the parking place 3-n is charged.

A usage fee per unit time varies depending on a model of the vertical take-off and landing aircraft M indicated by the remote ID, for example.

When the vertical take-off and landing aircraft M has received supply of fuel from the power source supplying device 25, a usage fee corresponding to a fuel supply amount is charged.

In a case where the vertical take-off and landing aircraft M has received charge of a battery from the power source supplying device 25, a usage fee corresponding to a charge amount is charged.

The charging management unit 52 specifies a time Ta during which the vertical take-off and landing aircraft M occupies the take-off and landing place 2 or a time Tb during which the vertical take-off and landing aircraft M occupies the parking place 3-n on the basis of the determination result indicating whether or not the vertical take-off and landing aircraft M occupies the take-off and landing place 2 or the parking place 3-n.

The charging management unit 52 specifies a model Model of the vertical take-off and landing aircraft M on the basis of the remote ID.

In addition, the charging management unit 52 specifies a fuel supply amount Fuel or a battery charge amount Char on the basis of the supply information.

The charging management unit 52 calculates a usage fee P of the vertical take-off and landing aircraft M using, for example, any one of the following Equations (1) to (4).

$$P = Ta \times Pa_{hour} \times c + Fuel \times F_{basic} \quad (1)$$

$$P = Tb \times Pb_{hour} \times c + Fuel \times F_{basic} \quad (2)$$

$$P = Ta \times Pa_{hour} \times c + Char \times C_{basic} \quad (3)$$

$$P = Tb \times Pb_{hour} \times c + Char \times C_{basic} \quad (4)$$

In Equations (1) to (4), $Pa_{hour}$ represents a usage fee per unit time at the take-off and landing place 2, and $Pb_{hour}$ represents a usage fee per unit time at the parking place 3-n.

c represents a variable corresponding to the model Model of the vertical take-off and landing aircraft M, and varies depending on the model Model. $F_{basic}$ represents a usage fee per unit supply amount, and $C_{basic}$ represents a usage fee per unit charge amount.

The charging management unit 52 transmits fee information indicating the usage fee P of the vertical take-off and landing aircraft M to, for example, a server device of a management company of the take-off and landing site 1.

In the above third embodiment, the take-off and landing site monitoring device 30 illustrated in FIG. 13 is configured to include the charging management unit 52 that calculates a usage fee of a vertical take-off and landing aircraft for the take-off and landing site 1 on the basis of the determination result of the occupation state determined by the obstruction detecting unit 45 and the identification information acquired by the identification information acquiring unit 42. Therefore, similarly to the take-off and landing site monitoring device 30 illustrated in FIG. 3, the take-off and landing site monitoring device 30 illustrated in FIG. 13 can specify the type of obstruction that hinders take-off and landing of a vertical take-off and landing aircraft, and can notify, for example, a management company of the take-off and landing site 1 of a usage fee of the vertical take-off and landing aircraft for the take-off and landing site 1.

Fourth embodiment.

In a fourth embodiment, a take-off and landing site monitoring device 30 including a wind measurement data acquiring unit 53 and a weather information acquiring unit 54 will be described.

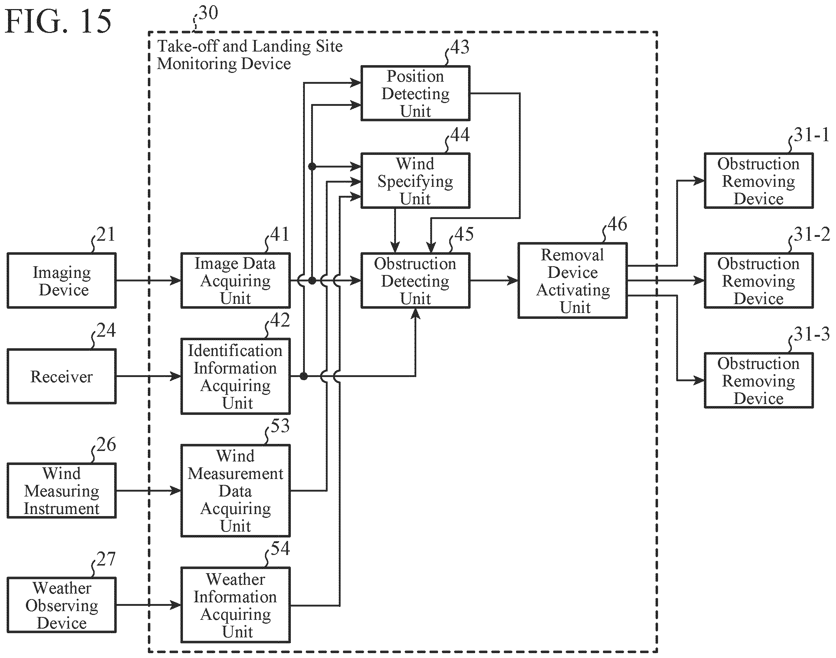

FIG. 15 is a configuration diagram illustrating a take-off and landing site monitoring system according to the fourth embodiment. In FIG. 15, the same reference numerals as in FIGS. 3, 9, and 13 indicate the same or corresponding parts, and therefore description thereof is omitted.

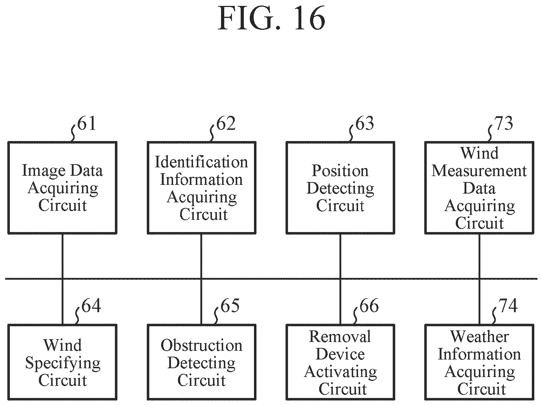

FIG. 16 is a hardware configuration diagram illustrating hardware of the take-off and landing site monitoring device 30 according to the fourth embodiment. In FIG. 16, the same reference numerals as in FIGS. 4, 10, and 14 indicate the same or corresponding parts, and therefore description thereof is omitted.

The take-off and landing site monitoring device 30 illustrated in FIG. 15 includes an image data acquiring unit 41, an identification information acquiring unit 42, a position detecting unit 43, a wind specifying unit 44, an obstruction detecting unit 45, and a removal device activating unit 46.

In addition, the take-off and landing site monitoring device 30 illustrated in FIG. 15 includes the wind measurement data acquiring unit 53 and the weather information acquiring unit 54.

In the take-off and landing site monitoring device 30 illustrated in FIG. 15, the wind measurement data acquiring unit 53 and the weather information acquiring unit 54 are applied to the take-off and landing site monitoring device 30 illustrated in FIG. 3. However, this is merely an example, and the wind measurement data acquiring unit 53 and the weather information acquiring unit 54 may be applied to the take-off and landing site monitoring device 30 illustrated in FIG. 9 or the take-off and landing site monitoring device 30 illustrated in FIG. 13.

A wind measuring instrument 26 is a wind direction and wind speed sensor that measures wind at a take-off and landing site 1.

The wind measuring instrument 26 outputs wind measurement data indicating a wind measurement result to the take-off and landing site monitoring device 30.

A weather observing device 27 is, for example, a device owned by a company or the like that provides weather data, and predicts wind in each region.

The weather observing device 27 transmits weather information indicating a wind prediction result at the take-off and landing site 1 to the take-off and landing site monitoring device 30 via a network such as the Internet.

The wind measurement data acquiring unit 53 is implemented by, for example, a wind measurement data acquiring circuit 73 illustrated in FIG. 16.

The wind measurement data acquiring unit 53 acquires wind measurement data indicating a wind measurement result from the wind measuring instrument 26.

The wind measurement data acquiring unit 53 outputs the wind measurement data to the wind specifying unit 44.

The weather information acquiring unit 54 is implemented by, for example, a weather information acquiring circuit 74 illustrated in FIG. 16.

The weather information acquiring unit 54 acquires weather information indicating a wind prediction result at the take-off and landing site 1 from the weather observing device 27.

The weather information acquiring unit 54 outputs the weather information to the wind specifying unit 44.

The wind specifying unit 44 illustrated in FIG. 15 specifies each of a wind direction and a wind speed at the take-off and landing site 1 on the basis of not only image data acquired by the image data acquiring unit 41 but also the wind measurement data acquired by the wind measurement data acquiring unit 53 and the weather information acquired by the weather information acquiring unit 54.

In FIG. 15, it is assumed that each of the image data acquiring unit 41, the identification information acquiring unit 42, the position detecting unit 43, the wind specifying unit 44, the obstruction detecting unit 45, and the removal device activating unit 46, the wind measurement data acquiring unit 53 and the weather information acquiring unit 54, which are constituent elements of the take-off and landing site monitoring device 30, is implemented by dedicated hardware as illustrated in FIG. 16.

That is, it is assumed that the take-off and landing site monitoring device 30 is implemented by the image data acquiring circuit 61, the identification information acquiring circuit 62, the position detecting circuit 63, the wind specifying circuit 64, the obstruction detecting circuit 65, the removal device activating circuit 66, the wind measurement data acquiring circuit 73, and the weather information acquiring circuit 74.

To each of the image data acquiring circuit 61, the identification information acquiring circuit 62, the position detecting circuit 63, the wind specifying circuit 64, the obstruction detecting circuit 65, the removal device activating circuit 66, the wind measurement data acquiring circuit 73, and the weather information acquiring circuit 74, for example, a single circuit, a composite circuit, a programmed processor, a parallel-programmed processor, ASIC, FPGA, or a combination thereof corresponds.

The constituent elements of the take-off and landing site monitoring device 30 are not limited to those implemented by dedicated hardware, and the take-off and landing site monitoring device 30 may be implemented by software, firmware, or a combination of software and firmware.

In a case where the take-off and landing site monitoring device 30 is implemented by software, firmware, or the like, a program for causing a computer to execute a processing procedure in each of the image data acquiring unit 41, the identification information acquiring unit 42, the position detecting unit 43, the wind specifying unit 44, the obstruction detecting unit 45, and the removal device activating unit 46, the wind measurement data acquiring unit 53 and the weather information acquiring unit 54 is stored in a memory 81 illustrated in FIG. 5. A processor 82 illustrated in FIG. 5 executes the program stored in the memory 81.

FIG. 16 illustrates an example in which each of the constituent elements of the take-off and landing site monitoring device 30 is implemented by dedicated hardware, and FIG. 5 illustrates an example in which the take-off and landing site monitoring device 30 is implemented by software, firmware, or the like. However, this is merely an example, and some of the constituent elements of the take-off and landing site monitoring device 30 may be implemented by dedicated hardware, and the remaining constituent elements may be implemented by software, firmware, or the like.

Next, an operation of the take-off and landing site monitoring system illustrated in FIG. 15 will be described. The operation of the take-off and landing site monitoring system illustrated in FIG. 15 is similar to that of the take-off and landing site monitoring system illustrated in FIG. 3 except for the wind measurement data acquiring unit 53, the weather information acquiring unit 54, and the wind specifying unit 44. Therefore, here, operations of the wind measurement data acquiring unit 53, the weather information acquiring unit 54, and the wind specifying unit 44 will be mainly described.

The wind measuring instrument 26 measures wind at the take-off and landing site 1.

The wind measuring instrument 26 outputs wind measurement data indicating a wind measurement result to the take-off and landing site monitoring device 30.

The weather observing device 27 observes wind in each region and predicts the wind in each region.

The weather observing device 27 transmits weather information indicating a wind prediction result at the take-off and landing site 1 to the take-off and landing site monitoring device 30 via a network such as the Internet.

The wind measurement data acquiring unit 53 acquires wind measurement data indicating a wind measurement result from the wind measuring instrument 26, and outputs the wind measurement data to the wind specifying unit 44.

The weather information acquiring unit 54 acquires weather information indicating a wind prediction result at the take-off and landing site 1 from the weather observing device 27, and outputs the weather information to the wind specifying unit 44.

The wind specifying unit 44 illustrated in FIG. 15 acquires image data from the image data acquiring unit 41.

In addition, the wind specifying unit 44 illustrated in FIG. 15 acquires the wind measurement data from the wind measurement data acquiring unit 53, and acquires the weather information from the weather information acquiring unit 54.

Similarly to the wind specifying unit 44 illustrated in FIG. 3, the wind specifying unit 44 illustrated in FIG. 15 specifies each of a wind direction and a wind speed at the take-off and landing site 1 on the basis of the image data.

The wind specifying unit 44 illustrated in FIG. 15 integrates a specification result based on the image data, the wind measurement data, and the weather information.

Specifically, the wind specifying unit 44 performs the integration by calculating an average value of the wind direction specified on the basis of the image data, the wind direction indicated by the wind measurement data, and the wind direction related to the prediction result indicated by the weather information.

In addition, the wind specifying unit 44 performs the integration by calculating an average value of the wind speed specified on the basis of the image data, the wind speed indicated by the wind measurement data, and the wind speed related to the prediction result indicated by the weather information.

The wind specifying unit 44 illustrated in FIG. 15 outputs wind information indicating each of the integrated wind direction and the integrated wind speed to the obstruction detecting unit 45.

In the take-off and landing site monitoring device 30 illustrated in FIG. 15, the wind specifying unit 44 performs the integration by calculating an average value of the wind direction specified on the basis of the image data, the wind direction indicated by the wind measurement data, and the wind direction related to the prediction result indicated by the weather information. However, this is merely an example, and the wind specifying unit 44 may perform the integration by calculating a weighted average value of the wind direction specified on the basis of the image data, the wind direction indicated by the wind measurement data, and the wind direction related to the prediction result indicated by the weather information. In addition, the wind specifying unit 44 may perform the integration by performing data assimilation of the wind direction specified on the basis of the image data, the wind direction indicated by the wind measurement data, and the wind direction related to the prediction result indicated by the weather information.

In the take-off and landing site monitoring device 30 illustrated in FIG. 15, the wind specifying unit 44 performs the integration by calculating an average value of the wind speed specified on the basis of the image data, the wind speed indicated by the wind measurement data, and the wind speed related to the prediction result indicated by the weather information. However, this is merely an example, and the wind specifying unit 44 may perform the integration by calculating a weighted average value of the wind speed specified on the basis of the image data, the wind speed indicated by the wind measurement data, and the wind speed related to the prediction result indicated by the weather information. In addition, the wind specifying unit 44 may perform the integration by performing data assimilation of the wind speed specified on the basis of the image data, the wind speed indicated by the wind measurement data, and the wind speed related to the prediction result indicated by the weather information.

In the above fourth embodiment, the take-off and landing site monitoring device 30 illustrated in FIG. 15 is configured to include the wind measurement data acquiring unit 53 that acquires wind measurement data indicating a wind measurement result from the wind measuring instrument 26 that measures wind at the take-off and landing site 1, and the weather information acquiring unit 54 that acquires weather information indicating a wind prediction result at the take-off and landing site 1 from the weather observing device 27. In addition, in the take-off and landing site monitoring device 30 illustrated in FIG. 15, the wind specifying unit 44 specifies each of a wind direction and a wind speed at the take-off and landing site 1 on the basis of image data acquired by the image data acquiring unit 41, wind measurement data acquired by the wind measurement data acquiring unit 53, and weather information acquired by the weather information acquiring unit 54. Therefore, similarly to the take-off and landing site monitoring device 30 illustrated in FIG. 3, the take-off and landing site monitoring device 30 illustrated in FIG. 15 can specify the type of obstruction that hinders take-off and landing of a vertical take-off and landing aircraft, and can enhance wind direction specifying accuracy and wind speed specifying accuracy as compared with the take-off and landing site monitoring device 30 illustrated in FIG. 3.

Fifth embodiment.

In a fifth embodiment, a take-off and landing site monitoring device 30 including a visibility information acquiring unit 55 and a suspicious flying object detecting unit 56 will be described.

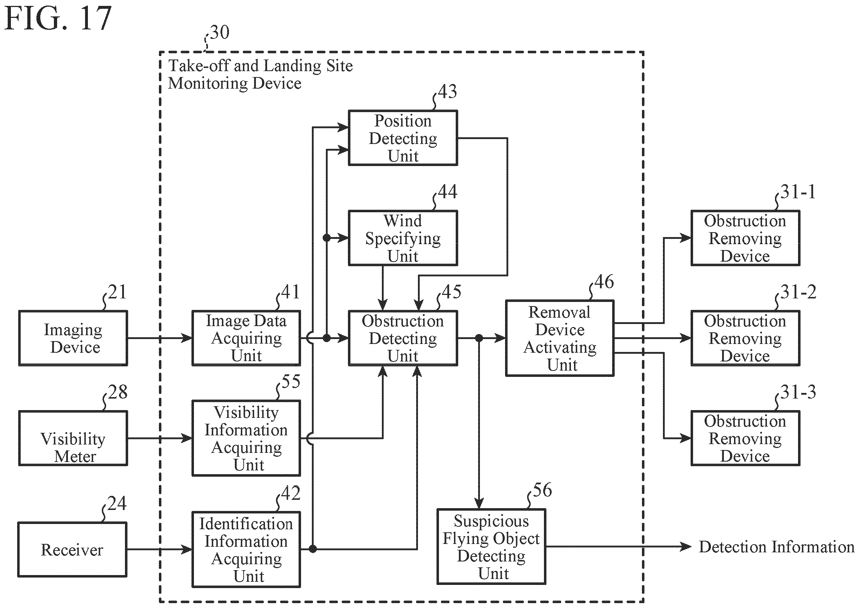

FIG. 17 is a configuration diagram illustrating a take-off and landing site monitoring system according to the fifth embodiment. In FIG. 17, the same reference numerals as in FIGS. 3, 9, 13, and 15 indicate the same or corresponding parts, and therefore description thereof is omitted.

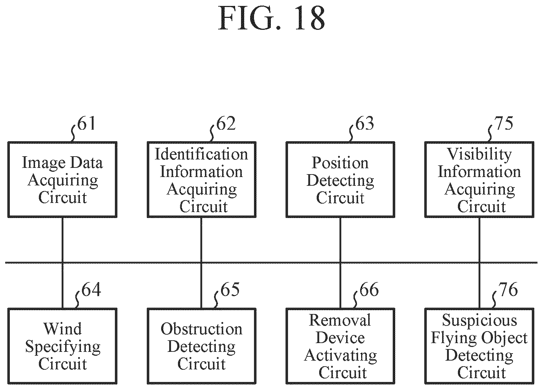

FIG. 18 is a hardware configuration diagram illustrating hardware of the take-off and landing site monitoring device 30 according to the fifth embodiment. In FIG. 18, the same reference numerals as in FIGS. 4, 10, 14, and 16 indicate the same or corresponding parts, and therefore description thereof is omitted.

The take-off and landing site monitoring device 30 illustrated in FIG. 17 includes an image data acquiring unit 41, an identification information acquiring unit 42, a position detecting unit 43, a wind specifying unit 44, an obstruction detecting unit 45, and a removal device activating unit 46.

In addition, the take-off and landing site monitoring device 30 illustrated in FIG. 17 includes the visibility information acquiring unit 55 and the suspicious flying object detecting unit 56.

In the take-off and landing site monitoring device 30 illustrated in FIG. 15, the visibility information acquiring unit 55 and the suspicious flying object detecting unit 56 are applied to the take-off and landing site monitoring device 30 illustrated in FIG. 3. However, this is merely an example, and the visibility information acquiring unit 55 and the suspicious flying object detecting unit 56 may be applied to the take-off and landing site monitoring device 30 illustrated in FIG. 9, the take-off and landing site monitoring device 30 illustrated in FIG. 13, or the take-off and landing site monitoring device 30 illustrated in FIG. 15.

A visibility meter 28 is a sensor that measures visibility of a take-off and landing airspace of a vertical take-off and landing aircraft M at a take-off and landing site 1.

The visibility information acquiring unit 55 is implemented by, for example, a visibility information acquiring circuit 75 illustrated in FIG. 18.

The visibility information acquiring unit 55 acquires visibility information indicating visibility of the take-off and landing airspace from the visibility meter 28.

The visibility information acquiring unit 55 outputs the visibility information to the obstruction detecting unit 45.

Similarly to the obstruction detecting unit 45 illustrated in FIG. 3, the obstruction detecting unit 45 illustrated in FIG. 17 determines the type of obstruction.

In addition, the obstruction detecting unit 45 illustrated in FIG. 17 determines visibility obstruction as the type of obstruction on the basis of the visibility information acquired by the visibility information acquiring unit 55.

The suspicious flying object detecting unit 56 is implemented by, for example, a suspicious flying object detecting circuit 76 illustrated in FIG. 18.

When the type of obstruction determined by the obstruction detecting unit 45 is presence of a suspicious flying object, the suspicious flying object detecting unit 56 transmits suspicious flying object detecting information to, for example, a server device of a management company of the take-off and landing site 1.

In FIG. 17, it is assumed that each of the image data acquiring unit 41, the identification information acquiring unit 42, the position detecting unit 43, the wind specifying unit 44, the obstruction detecting unit 45, and the removal device activating unit 46, the visibility information acquiring unit 55 and the suspicious flying object detecting unit 56, which are constituent elements of the take-off and landing site monitoring device 30, is implemented by dedicated hardware as illustrated in FIG. 18. That is, it is assumed that the take-off and landing site monitoring device 30 is implemented by the image data acquiring circuit 61, the identification information acquiring circuit 62, the position detecting circuit 63, the wind specifying circuit 64, the obstruction detecting circuit 65, the removal device activating circuit 66, the visibility information acquiring circuit 75, and the suspicious flying object detecting circuit 76.

To each of the image data acquiring circuit 61, the identification information acquiring circuit 62, the position detecting circuit 63, the wind specifying circuit 64, the obstruction detecting circuit 65, the removal device activating circuit 66, the visibility information acquiring circuit 75, and the suspicious flying object detecting circuit 76, for example, a single circuit, a composite circuit, a programmed processor, a parallel-programmed processor, ASIC, FPGA, or a combination thereof corresponds.

The constituent elements of the take-off and landing site monitoring device 30 are not limited to those implemented by dedicated hardware, and the take-off and landing site monitoring device 30 may be implemented by software, firmware, or a combination of software and firmware.

In a case where the take-off and landing site monitoring device 30 is implemented by software, firmware, or the like, a program for causing a computer to execute a processing procedure in each of the image data acquiring unit 41, the identification information acquiring unit 42, the position detecting unit 43, the wind specifying unit 44, the obstruction detecting unit 45, and the removal device activating unit 46, the visibility information acquiring unit 55, and the suspicious flying object detecting unit 56 is stored in a memory 81 illustrated in FIG. 5. A processor 82 illustrated in FIG. 5 executes the program stored in the memory 81.

FIG. 18 illustrates an example in which each of the constituent elements of the take-off and landing site monitoring device 30 is implemented by dedicated hardware, and FIG. 5 illustrates an example in which the take-off and landing site monitoring device 30 is implemented by software, firmware, or the like. However, this is merely an example, and some of the constituent elements of the take-off and landing site monitoring device 30 may be implemented by dedicated hardware, and the remaining constituent elements may be implemented by software, firmware, or the like.

Next, an operation of the take-off and landing site monitoring system illustrated in FIG. 17 will be described. The operation of the take-off and landing site monitoring system illustrated in FIG. 17 is similar to that of the take-off and landing site monitoring system illustrated in FIG. 3 except for the obstruction detecting unit 45, the visibility information acquiring unit 55, and the suspicious flying object detecting unit 56. Therefore, here, operations of the obstruction detecting unit 45, the visibility information acquiring unit 55, and the suspicious flying object detecting unit 56 will be mainly described.

By measuring an extinction ratio of the atmosphere in the take-off and landing airspace of the vertical take-off and landing aircraft M or a light transmittance of the atmosphere in the take-off and landing airspace, the visibility meter 28 measures visibility of the take-off and landing airspace.

The visibility meter 28 outputs visibility information indicating visibility to the take-off and landing site monitoring device 30.

The visibility information acquiring unit 55 acquires the visibility information from the visibility meter 28, and outputs the visibility information to the obstruction detecting unit 45.

Similarly to the obstruction detecting unit 45 illustrated in FIG. 3, the obstruction detecting unit 45 illustrated in FIG. 17 determines the type of obstruction.

The obstruction detecting unit 45 illustrated in FIG. 17 acquires the visibility information from the visibility information acquiring unit 55.

Unlike the obstruction detecting unit 45 illustrated in FIG. 3, the obstruction detecting unit 45 illustrated in FIG. 17 also determines visibility obstruction as the type of obstruction on the basis of the visibility information.

That is, the obstruction detecting unit 45 illustrated in FIG. 17 compares the visibility indicated by the visibility information with a visibility determining threshold, and recognizes that visibility obstruction is occurring when the visibility is shorter than the visibility determining threshold.

The obstruction detecting unit 45 illustrated in FIG. 17 recognizes that visibility obstruction is not occurring when the visibility is equal to or more than the visibility determining threshold.

The visibility determining threshold may be stored in an internal memory of the obstruction detecting unit 45 or may be given from the outside of the take-off and landing site monitoring device 30.

The obstruction detecting unit 45 illustrated in FIG. 17 outputs the determination result of the obstruction type to each of the removal device activating unit 46 and the suspicious flying object detecting unit 56.

The removal device activating unit 46 acquires a determination result of the obstruction type from the obstruction detecting unit 45 illustrated in FIG. 17.

The removal device activating unit 46 selects an obstruction removing device used for removal of obstruction from among the obstruction removing devices 31-1 to 31-3 on the basis of the type of obstruction determined by the obstruction detecting unit 45.

The removal device activating unit 46 activates the selected obstruction removing device.

When the type of obstruction is "visibility obstruction", there is no obstruction removing device capable of removing the obstruction among the obstruction removing devices 31-1 to 31-3. Therefore, the removal device activating unit 46 transmits a message indicating the type of obstruction to, for example, a server device of a management company of the take-off and landing site 1.

The suspicious flying object detecting unit 56 acquires the determination result of the obstruction type from the obstruction detecting unit 45 illustrated in FIG. 17.

When the type of obstruction is "presence of a suspicious flying object", the suspicious flying object detecting unit 56 transmits suspicious flying object detecting information to, for example, a server device of a management company of the take-off and landing site 1.

For example, when a drone catching device or an anti-drone device is disposed at the take-off and landing site 1, the suspicious flying object detecting unit 56 may remove the suspicious flying object by activating the drone catching device or the like via the removal device activating unit 46, for example.

In the above fifth embodiment, the take-off and landing site monitoring device 30 illustrated in FIG. 17 is configured to include the visibility information acquiring unit 55 that acquires visibility information indicating visibility from the visibility meter 28 that measures visibility of a take-off and landing airspace of a vertical take-off and landing aircraft at the take-off and landing site 1, in such a manner that the obstruction detecting unit 45 determines visibility obstruction as the type of obstruction on the basis of the visibility information acquired by the visibility information acquiring unit 55. Therefore, similarly to the take-off and landing site monitoring device 30 illustrated in FIG. 3, the take-off and landing site monitoring device 30 illustrated in FIG. 17 can specify the type of obstruction that hinders take-off and landing of a vertical take-off and landing aircraft, and can specify visibility obstruction as the type of obstruction.

In addition, in the fifth embodiment, the take-off and landing site monitoring device 30 is configured to include the suspicious flying object detecting unit 56 that transmits suspicious flying object detecting information when the type of obstruction determined by the obstruction detecting unit 45 is presence of the suspicious flying object. Therefore, the take-off and landing site monitoring device 30 can notify, for example, a management company of the take-off and landing site 1 of presence of the suspicious flying object.

Sixth embodiment.

In a sixth embodiment, a take-off and landing site monitoring device 30 including an aeronautical weather information providing unit 57 and an electromagnetic environment information acquiring unit 58 will be described.

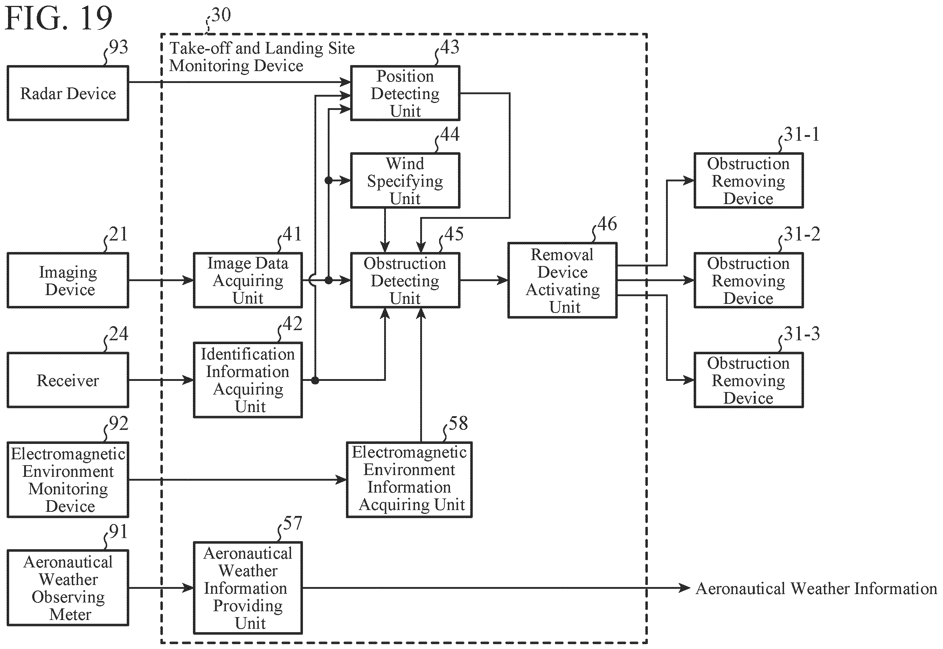

FIG. 19 is a configuration diagram illustrating a take-off and landing site monitoring system according to the sixth embodiment. In FIG. 19, the same reference numerals as in FIGS. 3, 9, 13, 15, and 17 indicate the same or corresponding parts, and therefore description thereof is omitted.

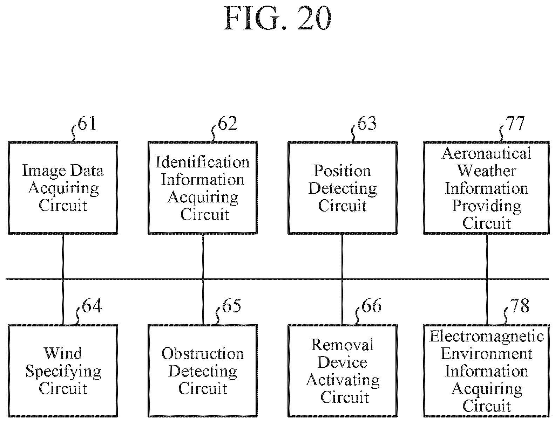

FIG. 20 is a hardware configuration diagram illustrating hardware of the take-off and landing site monitoring device 30 according to the sixth embodiment. In FIG. 20, the same reference numerals as in FIGS. 4, 10, 14, 16, and 18 indicate the same or corresponding parts, and therefore description thereof is omitted.

The take-off and landing site monitoring device 30 illustrated in FIG. 19 includes an image data acquiring unit 41, an identification information acquiring unit 42, a position detecting unit 43, a wind specifying unit 44, an obstruction detecting unit 45, and a removal device activating unit 46.

In addition, the take-off and landing site monitoring device 30 illustrated in FIG. 19 includes the aeronautical weather information providing unit 57 and the electromagnetic environment information acquiring unit 58.

In the take-off and landing site monitoring device 30 illustrated in FIG. 19, the aeronautical weather information providing unit 57 and the electromagnetic environment information acquiring unit 58 are applied to the take-off and landing site monitoring device 30 illustrated in FIG. 3. However, this is merely an example, and the aeronautical weather information providing unit 57 and the electromagnetic environment information acquiring unit 58 may be applied to the take-off and landing site monitoring device 30 illustrated in FIG. 9, the take-off and landing site monitoring device 30 illustrated in FIG. 13, the take-off and landing site monitoring device 30 illustrated in FIG. 15, or the take-off and landing site monitoring device 30 illustrated in FIG. 17.

An aeronautical weather observing meter 91 includes, as sensors, for example, one or more of a visibility meter, a rain gauge, a thermometer, a barometer, a snow gauge, a hygrometer, a cloud height measuring instrument, and a wind direction and wind speed sensor.

The aeronautical weather observing meter 91 observes, as aeronautical weather, one or more of visibility, rainfall, temperature, atmospheric pressure, snow cover, and humidity.

The aeronautical weather observing meter 91 outputs aeronautical weather information indicating an observation result of aeronautical weather to the take-off and landing site monitoring device 30.

An electromagnetic environment monitoring device 92 monitors an electromagnetic environment at the take-off and landing site 1. The electromagnetic environment at the take-off and landing site 1 may include not only an electromagnetic environment in the site of the take-off and landing site 1 but also an electromagnetic environment around the take-off and landing site 1.

The electromagnetic environment monitoring device 92 outputs electromagnetic environment information indicating a monitoring result of the electromagnetic environment to the take-off and landing site monitoring device 30.

A radar device 93 receives a reflected wave from a vertical take-off and landing aircraft M, and detects the position of the vertical take-off and landing aircraft M from the reflected wave.

The radar device 93 outputs position information indicating the position of the vertical take-off and landing aircraft M to the take-off and landing site monitoring device 30.

The aeronautical weather information providing unit 57 is implemented by, for example, an aeronautical weather information providing circuit 77 illustrated in FIG. 20.

The aeronautical weather information providing unit 57 acquires aeronautical weather information indicating an observation result of aeronautical weather from the aeronautical weather observing meter 91 that observes aeronautical weather.

The aeronautical weather information providing unit 57 transmits the aeronautical weather information to the vertical take-off and landing aircraft M using the take-off and landing site 1.

In addition, the aeronautical weather information providing unit 57 determines whether or not weather at the take-off and landing site 1 is visual weather on the basis of the aeronautical weather information.

The aeronautical weather information providing unit 57 transmits a determination result of the visual weather to the vertical take-off and landing aircraft M using the take-off and landing site 1.

The electromagnetic environment information acquiring unit 58 is implemented by, for example, an electromagnetic environment information acquiring circuit 78 illustrated in FIG. 20.

The electromagnetic environment information acquiring unit 58 acquires electromagnetic environment information indicating a monitoring result of the electromagnetic environment from the electromagnetic environment monitoring device 92 that monitors the electromagnetic environment at the take-off and landing site 1.

The electromagnetic environment information acquiring unit 58 outputs the electromagnetic environment information to the obstruction detecting unit 45.

Similarly to the obstruction detecting unit 45 illustrated in FIG. 3, the obstruction detecting unit 45 illustrated in FIG. 19 determines the type of obstruction.

In addition, the obstruction detecting unit 45 illustrated in FIG. 19 determines electromagnetic obstruction as the type of obstruction on the basis of the electromagnetic environment information acquired by the electromagnetic environment information acquiring unit 58.

Similarly to the position detecting unit 43 illustrated in FIG. 3, the position detecting unit 43 illustrated in FIG. 19 detects the position of the vertical take-off and landing aircraft M on the basis of image data acquired by the image data acquiring unit 41 and the like.

In addition, unlike the position detecting unit 43 illustrated in FIG. 3, the position detecting unit 43 illustrated in FIG. 19 acquires position information indicating the position of the vertical take-off and landing aircraft M from the radar device 93, and detects the position of the vertical take-off and landing aircraft M on the basis of the position information.

The position detecting unit 43 illustrated in FIG. 19 may use either the position of the vertical take-off and landing aircraft M detected on the basis of the image data and the like or the position of the vertical take-off and landing aircraft M detected on the basis of the position information as a detection result. For example, the position detecting unit 43 illustrated in FIG. 19 may use an average value of the position of the vertical take-off and landing aircraft M detected on the basis of the image data and the like and the position of the vertical take-off and landing aircraft M detected on the basis of the position information as a detection result.

The take-off and landing site monitoring system illustrated in FIG. 19 includes the radar device 93. However, this is merely an example, and the take-off and landing site monitoring system illustrated in FIG. 19 may include, in addition to the radar device 93, a LiDAR device that detects the position of a vertical take-off and landing aircraft M, or may include both the radar device 93 and the LiDAR device.

In FIG. 19, it is assumed that each of the image data acquiring unit 41, the identification information acquiring unit 42, the position detecting unit 43, the wind specifying unit 44, the obstruction detecting unit 45, and the removal device activating unit 46, the aeronautical weather information providing unit 57, and the electromagnetic environment information acquiring unit 58, which are constituent elements of the take-off and landing site monitoring device 30, is implemented by dedicated hardware as illustrated in FIG. 20. That is, it is assumed that the take-off and landing site monitoring device 30 is implemented by the image data acquiring circuit 61, the identification information acquiring circuit 62, the position detecting circuit 63, the wind specifying circuit 64, the obstruction detecting circuit 65, the removal device activating circuit 66, the aeronautical weather information providing circuit 77, and the electromagnetic environment information acquiring circuit 78.

To each of the image data acquiring circuit 61, the identification information acquiring circuit 62, the position detecting circuit 63, the wind specifying circuit 64, the obstruction detecting circuit 65, the removal device activating circuit 66, the aeronautical weather information providing circuit 77, and the electromagnetic environment information acquiring circuit 78, for example, a single circuit, a composite circuit, a programmed processor, a parallel-programmed processor, ASIC, FPGA, or a combination thereof corresponds.

The constituent elements of the take-off and landing site monitoring device 30 are not limited to those implemented by dedicated hardware, and the take-off and landing site monitoring device 30 may be implemented by software, firmware, or a combination of software and firmware.

In a case where the take-off and landing site monitoring device 30 is implemented by software, firmware, or the like, a program for causing a computer to execute a processing procedure in each of the image data acquiring unit 41, the identification information acquiring unit 42, the position detecting unit 43, the wind specifying unit 44, the obstruction detecting unit 45, and the removal device activating unit 46, the aeronautical weather information providing unit 57, and the electromagnetic environment information acquiring unit 58 is stored in a memory 81 illustrated in FIG. 5. A processor 82 illustrated in FIG. 5 executes the program stored in the memory 81.

FIG. 20 illustrates an example in which each of the constituent elements of the take-off and landing site monitoring device 30 is implemented by dedicated hardware, and FIG. 5 illustrates an example in which the take-off and landing site monitoring device 30 is implemented by software, firmware, or the like. However, this is merely an example, and some of the constituent elements of the take-off and landing site monitoring device 30 may be implemented by dedicated hardware, and the remaining constituent elements may be implemented by software, firmware, or the like.

Next, an operation of the take-off and landing site monitoring system illustrated in FIG. 19 will be described. The operation of the take-off and landing site monitoring system illustrated in FIG. 19 is similar to that of the take-off and landing site monitoring system illustrated in FIG. 3 except for the position detecting unit 43, the obstruction detecting unit 45, the aeronautical weather information providing unit 57, and the electromagnetic environment information acquiring unit 58. Therefore, here, operations of the position detecting unit 43, the obstruction detecting unit 45, the aeronautical weather information providing unit 57, and the electromagnetic environment information acquiring unit 58 will be mainly described.

The aeronautical weather observing meter 91 observes, as aeronautical weather, for example, one or more of visibility, rainfall, temperature, atmospheric pressure, snow cover, and humidity.

The aeronautical weather observing meter 91 outputs aeronautical weather information indicating an observation result of aeronautical weather to the take-off and landing site monitoring device 30.

The aeronautical weather information providing unit 57 acquires aeronautical weather information from the aeronautical weather observing meter 91 and transmits the aeronautical weather information to the vertical take-off and landing aircraft M using the take-off and landing site 1.

In addition, the aeronautical weather information providing unit 57 determines whether or not weather at the take-off and landing site 1 is visual weather on the basis of the aeronautical weather information.

For example, the aeronautical weather information providing unit 57 compares visibility included in an observation result indicated by the aeronautical weather information with a visual weather determining threshold based on the visibility, and determines that the weather is visual weather when the visibility is equal to or more than the visual weather determining threshold.

The aeronautical weather information providing unit 57 determines that the visibility is not visual weather when the visibility is less than the visual weather determining threshold. The visual weather determining threshold may be stored in an internal memory of the aeronautical weather information providing unit 57 or may be given from the outside of the take-off and landing site monitoring device 30.

The aeronautical weather information providing unit 57 transmits a determination result of the visual weather to the vertical take-off and landing aircraft M using the take-off and landing site 1.

In the take-off and landing site monitoring device 30 illustrated in FIG. 19, the aeronautical weather information providing unit 57 determines whether or not the weather at the take-off and landing site 1 is visual weather by comparing visibility included in an observation result indicated by the aeronautical weather information with the visual weather determining threshold based on the visibility. However, this is merely an example, and the aeronautical weather information providing unit 57 may determine whether or not the weather at the take-off and landing site 1 is visual weather by comparing a cloud height included in an observation result indicated by the aeronautical weather information with a visual weather determining threshold base on the cloud height. The aeronautical weather information providing unit 57 determines that the weather is visual weather when the cloud height is equal to or more than the visual weather determining threshold, and determines that the weather is not visual weather when the cloud height is less than the visual weather determining threshold.

In addition, the aeronautical weather information providing unit 57 may determine that the weather is visual weather, for example, only in a case where visibility is equal to or more than a visual weather determining threshold based on the visibility and a cloud height is equal to or more than a visual weather determining threshold based on the cloud height.

The electromagnetic environment monitoring device 92 monitors, for example, radio wave interference at the take-off and landing site 1 as an electromagnetic environment at the take-off and landing site 1.

The electromagnetic environment monitoring device 92 outputs electromagnetic environment information indicating a monitoring result of the electromagnetic environment to the take-off and landing site monitoring device 30.

The electromagnetic environment information acquiring unit 58 acquires electromagnetic environment information from the electromagnetic environment monitoring device 92, and outputs the electromagnetic environment information to the obstruction detecting unit 45.

Similarly to the obstruction detecting unit 45 illustrated in FIG. 3, the obstruction detecting unit 45 illustrated in FIG. 19 determines the type of obstruction.

In addition, the obstruction detecting unit 45 illustrated in FIG. 19 acquires the electromagnetic environment information from the electromagnetic environment information acquiring unit 58.

Unlike the obstruction detecting unit 45 illustrated in FIG. 3, the obstruction detecting unit 45 illustrated in FIG. 19 also determines electromagnetic obstruction as the type of obstruction on the basis of the electromagnetic environment information.

For example, the obstruction detecting unit 45 illustrated in FIG. 19 compares the level of radio wave interference indicated by the electromagnetic environment information with a radio wave interference threshold, and recognizes electromagnetic obstruction as the type of obstruction when the level of radio wave interference is equal to or more than the radio wave interference threshold.

The obstruction detecting unit 45 illustrated in FIG. 19 does not recognize electromagnetic obstruction as the type of obstruction when the level of radio wave interference is the radio wave interference threshold. The radio wave interference threshold may be stored in an internal memory of the obstruction detecting unit 45 or may be given from the outside of the take-off and landing site monitoring device 30.

The obstruction detecting unit 45 illustrated in FIG. 19 outputs a determination result of the obstruction type to the removal device activating unit 46.

The removal device activating unit 46 acquires a determination result of the obstruction type from the obstruction detecting unit 45 illustrated in FIG. 19.

The removal device activating unit 46 selects an obstruction removing device used for removal of obstruction from among the obstruction removing devices 31-1 to 31-3 on the basis of the type of obstruction determined by the obstruction detecting unit 45.

The removal device activating unit 46 activates the selected obstruction removing device.

When the type of obstruction is "electromagnetic obstruction", there is no obstruction removing device capable of removing obstruction among the obstruction removing devices 31-1 to 31-3. Therefore, the removal device activating unit 46 transmits a message indicating the type of obstruction to, for example, a server device of a management company of the take-off and landing site 1.

As operation of a management company that has acquired a message indicating the type of obstruction, for example, the following operation is conceivable.

In a case where there is electromagnetic obstruction, operation of equipment used for operation of the vertical take-off and landing aircraft M may be hindered. Therefore, it is conceivable that the management company stops operation of take-off and landing for the vertical take-off and landing aircraft M and starts investigation of a cause of the electromagnetic obstruction.

Alternatively, when the message indicating the type of obstruction indicates electromagnetic obstruction, it is conceivable that operation of take-off and landing for the vertical take-off and landing aircraft M is automatically stopped.

In the take-off and landing site monitoring device 30 illustrated in FIG. 19, the obstruction detecting unit 45 determines electromagnetic obstruction. For example, in a case where a snow removing device or a snow melting device is disposed in the take-off and landing site 1, in addition to determining the electromagnetic obstruction, the obstruction detecting unit 45 may determine either whether or not snow removal is necessary or whether or not snow melting is necessary on the basis of aeronautical weather regarding snow cover acquired from, for example, the aeronautical weather observing meter 91.

When determining that snow removal is necessary, the obstruction detecting unit 45 removes accumulated snow, by, for example, activating a snow removal device via the removal device activating unit 46. When determining that snow melting is necessary, the obstruction detecting unit 45 removes accumulated snow, by, for example, activating a snow melting device via the removal device activating unit 46.

In the above sixth embodiment, the take-off and landing site monitoring device 30 illustrated in FIG. 19 is configured to include the aeronautical weather information providing unit 57 that acquires aeronautical weather information indicating an observation result of aeronautical weather from the aeronautical weather observing meter 91 that observes the aeronautical weather, and transmits the aeronautical weather information to a vertical take-off and landing aircraft using the take-off and landing site 1. Therefore, similarly to the take-off and landing site monitoring device 30 illustrated in FIG. 3, the take-off and landing site monitoring device 30 illustrated in FIG. 19 can specify the type of obstruction that hinders take-off and landing of a vertical take-off and landing aircraft, and can notify the vertical take-off and landing aircraft of the aeronautical weather.

In addition, in the above sixth embodiment, the take-off and landing site monitoring device 30 is configured to include the electromagnetic environment information acquiring unit 58 that acquires, from the electromagnetic environment monitoring device 92 that monitors an electromagnetic environment at the take-off and landing site 1, electromagnetic environment information indicating a monitoring result of the electromagnetic environment, in such a manner that the obstruction detecting unit 45 determines electromagnetic obstruction as the type of obstruction on the basis of the electromagnetic environment information acquired by the electromagnetic environment information acquiring unit 58. Therefore, the take-off and landing site monitoring device 30 can also specify the electromagnetic obstruction as the type of obstruction.

Note that the present disclosure can freely combine the embodiments to each other, modify any constituent element in each of the embodiments, or omit any constituent element in each of the embodiments.

INDUSTRIAL APPLICABILITY

The present disclosure is suitable for a take-off and landing site monitoring device, a take-off and landing site monitoring method, and a take-off and landing site monitoring system.

REFERENCE SIGNS LIST

1: take-off and landing site, 2: take-off and landing place, 2a: marking, 3-1, 3-2, 3-3: parking place, 3-1a, 3-2a, 3-3a: marking, 11: drone, 12: flying vehicle, 13: helicopter, 21: imaging device, 22: lighting device, 23: windsock, 24: receiver, 25: power source supplying device, 26: wind measuring instrument, 27: weather observing device, 28: visibility meter, 30: take-off and landing site monitoring device, 31-1 to 31-3: obstruction removing device, 41: image data acquiring unit, 42: identification information acquiring unit, 43: position detecting unit, 44: wind specifying unit, 45: obstruction detecting unit, 46: removal device activating unit, 47: management information acquiring unit, 48: flight information acquiring unit, 49: operation state determining unit, 50: operation planning unit, 51: supply information acquiring unit, 52: charging management unit, 53: wind measurement data acquiring unit, 54: weather information acquiring unit, 55: visibility information acquiring unit, 56: suspicious flying object detecting unit, 57: aeronautical weather information providing unit, 58: electromagnetic environment information acquiring unit, 61: image data acquiring circuit, 62: identification information acquiring circuit, 63: position detecting circuit, 64: wind specifying circuit, 65: obstruction detecting circuit, 66: removal device activating circuit, 67: management information acquiring circuit, 68: flight information acquiring circuit, 69: operation state determining circuit, 70: operation planning circuit, 71: supply information acquiring circuit, 72: charging management circuit, 73: wind measurement data acquiring circuit, 74: weather information acquiring circuit, 75: visibility information acquiring circuit, 76: suspicious flying object detecting circuit, 77: aeronautical weather information providing circuit, 78: electromagnetic environment information acquiring circuit, 81: memory, 82: processor, 91: aeronautical weather observing meter, 92: electromagnetic environment monitoring device, 93: radar device

**Claims**

1. A take-off and landing site monitoring device comprising:

   an image data acquiring unit to acquire, from an imaging device to image a take-off and landing site, image data indicating a captured image of the take-off and landing site; and
   an obstruction detecting unit to determine a type of obstruction that hinders take-off and landing of a vertical take-off and landing aircraft using the take-off and landing site on a basis of the image data acquired by the image data acquiring unit.

2. The take-off and landing site monitoring device according to claim 1, comprising a removal device activating unit to select an obstruction removing device used for removal of obstruction from among a plurality of obstruction removing devices whose types of obstruction to be removed are different from each other on a basis of the type of obstruction determined by the obstruction detecting unit, and to activate the selected obstruction removing device.

3. The take-off and landing site monitoring device according to claim 1, comprising an identification information acquiring unit to acquire, from a receiver to receive identification information of the vertical take-off and landing aircraft, the identification information, wherein
   the obstruction detecting unit determines the type of obstruction on a basis of the image data and the identification information acquired by the identification information acquiring unit.

4. The take-off and landing site monitoring device according to claim 3, comprising a position detecting unit to detect a position of the vertical take-off and landing aircraft on a basis of the image data acquired by the image data acquiring unit, wherein
   the obstruction detecting unit determines the type of obstruction on a basis of the image data, the identification information, and the position detected by the position detecting unit.

5. The take-off and landing site monitoring device according to claim 1, comprising a wind specifying unit to specify each of a wind direction and a wind speed at the take-off and landing site on a basis of the image data acquired by the image data acquiring unit, wherein
   the obstruction detecting unit determines the type of obstruction on a basis of the image data and each of the wind direction and the wind speed specified by the wind specifying unit.

6. The take-off and landing site monitoring device according to claim 1, wherein

   the obstruction detecting unit
   specifies an appearance of a marking applied to a take-off and landing position in the take-off and landing site on a basis of the image data acquired by the image data acquiring unit, and determines an occupation state of the take-off and landing position by either a vertical take-off and landing aircraft or an obstacle on a basis of the appearance of the marking, and
   specifies an appearance of a marking applied to a parking position in the take-off and landing site on a basis of the image data, and determines an occupation state of the parking position by either a vertical take-off and landing aircraft or an obstacle on a basis of the appearance of the marking applied to the parking position.

7. The take-off and landing site monitoring device according to claim 1, comprising an operation state determining unit to determine an operation state of the take-off and landing site on a basis of a determination result of the obstruction type determined by the obstruction detecting unit.

8. The take-off and landing site monitoring device according to claim 7, comprising a management information acquiring unit to acquire management information indicating maintenance of the take-off and landing site, wherein
   the operation state determining unit determines an operation state of the take-off and landing site on a basis of a determination result of the obstruction type determined by the obstruction detecting unit and the management information acquired by the manage-

47 EP 4 530 183 A1 48

ment information acquiring unit.

9. The take-off and landing site monitoring device according to claim 7, comprising an operation planning unit to create or update an operation plan of the take-off and landing site on a basis of an operation state of the take-off and landing site determined by the operation state determining unit.

10. The take-off and landing site monitoring device according to claim 9, comprising:

an operation information acquiring unit to acquire operation information of the vertical take-off and landing aircraft; and
an identification information acquiring unit to acquire, from a receiver to receive identification information of the vertical take-off and landing aircraft, the identification information, wherein
the operation planning unit updates the operation plan on a basis of the operation information acquired by the operation information acquiring unit and the identification information acquired by the identification information acquiring unit.

11. The take-off and landing site monitoring device according to claim 6, comprising:

an identification information acquiring unit to acquire, from a receiver to receive identification information of the vertical take-off and landing aircraft, the identification information; and
a charging management unit to calculate a usage fee of the vertical take-off and landing aircraft for the take-off and landing site on a basis of a determination result of the occupation state determined by the obstruction detecting unit and the identification information acquired by the identification information acquiring unit.

12. The take-off and landing site monitoring device according to claim 11, comprising a supply information acquiring unit to acquire supply information indicating a fuel supply amount to the vertical take-off and landing aircraft or a charge amount to the vertical take-off and landing aircraft from a power source supplying device, wherein
the charging management unit calculates a usage fee of the vertical take-off and landing aircraft on a basis of the determination result of the occupation state determined by the obstruction detecting unit, the identification information, and the supply information.

13. The take-off and landing site monitoring device according to claim 5, comprising:

a wind measurement data acquiring unit to acquire, from a wind measuring instrument to measure wind at the take-off and landing site, wind measurement data indicating a measurement result of the wind; and
a weather information acquiring unit to acquire weather information indicating a wind prediction result at the take-off and landing site from a weather observing device, wherein
the wind specifying unit specifies each of a wind direction and a wind speed at the take-off and landing site on a basis of the image data acquired by the image data acquiring unit, the wind measurement data acquired by the wind measurement data acquiring unit, and the weather information acquired by the weather information acquiring unit.

14. The take-off and landing site monitoring device according to claim 1, comprising a visibility information acquiring unit to acquire, from a visibility meter to measure visibility of a take-off and landing airspace at the take-off and landing site, visibility information indicating the visibility, wherein
the obstruction detecting unit determines visibility obstruction as the type of obstruction on a basis of the visibility information acquired by the visibility information acquiring unit.

15. The take-off and landing site monitoring device according to claim 3, comprising a suspicious flying object detecting unit to transmit suspicious flying object detecting information when the type of obstruction determined by the obstruction detecting unit is presence of the suspicious flying object.

16. The take-off and landing site monitoring device according to claim 1, comprising an aeronautical weather information providing unit to acquire, from an aeronautical weather observing meter to observe aeronautical weather, aeronautical weather information indicating an observation result of the aeronautical weather, and to transmit the aeronautical weather information to a vertical take-off and landing aircraft using the take-off and landing site.

17. The take-off and landing site monitoring device according to claim 16, wherein
the aeronautical weather information providing unit determines whether or not weather at the take-off and landing site is visual weather on a basis of the aeronautical weather information, and transmits a determination result of the visual weather to the vertical take-off and landing aircraft.

18. The take-off and landing site monitoring device according to claim 1, comprising an electromagnetic environment information acquiring unit to acquire, from an electromagnetic environment monitoring

25

device to monitor an electromagnetic environment at the take-off and landing site, electromagnetic environment information indicating a monitoring result of the electromagnetic environment, wherein
the obstruction detecting unit determines electromagnetic obstruction as the type of obstruction on a basis of the electromagnetic environment information acquired by the electromagnetic environment information acquiring unit.

19. The take-off and landing site monitoring device according to claim 4, wherein
the position detecting unit acquires, from a radar device to receive a reflected wave from the vertical take-off and landing aircraft and to detect a position of the vertical take-off and landing aircraft from the reflected wave, position information indicating the position of the vertical take-off and landing aircraft.

20. A take-off and landing site monitoring method comprising:

acquiring, by an image data acquiring unit, from an imaging device to image a take-off and landing site, image data indicating a captured image of the take-off and landing site; and
determining, by an obstruction detecting unit, a type of obstruction that hinders take-off and landing of a vertical take-off and landing aircraft using the take-off and landing site on a basis of the image data acquired by the image data acquiring unit.

21. A take-off and landing site monitoring system comprising:

an imaging device to image a take-off and landing site;
an image data acquiring unit to acquire, from the imaging device, image data indicating a captured image of the take-off and landing site; and
an obstruction detecting unit to determine a type of obstruction that hinders take-off and landing of a vertical take-off and landing aircraft using the take-off and landing site on a basis of the image data acquired by the image data acquiring unit.

# FIG. 1

# FIG. 2

EP 4 530 183 A1

Take-off and Landing Airspace

FIG. 3

Take-off and Landing Site Monitoring Device (30)

- Imaging Device (21) → Image Data Acquiring Unit (41)
- Receiver (24) → Identification Information Acquiring Unit (42)
- Position Detecting Unit (43)
- Wind Specifying Unit (44)
- Obstruction Detecting Unit (45)
- Removal Device Activating Unit (46)
- Obstruction Removing Device (31-1)
- Obstruction Removing Device (31-2)
- Obstruction Removing Device (31-3)

# FIG. 4

| 61 | 62 | 63 |
|---|---|---|
| Image Data Acquiring Circuit | Identification Information Acquiring Circuit | Position Detecting Circuit |

| 64 | 65 | 66 |
|---|---|---|
| Wind Specifying Circuit | Obstruction Detecting Circuit | Removal Device Activating Circuit |

# FIG. 5

| 81 | 82 |
|---|---|
| Memory | Processor |

# FIG. 6

START

ST1

Image Data Acquiring Unit
Acquires Image Data

ST2

Identification Information Acquiring Unit
Acquires Remote ID

ST3

Position Detecting Unit
Detects Position of
Vertical Take-off and Landing Aircraft

ST4

Wind Specifying Unit Specifies Each of
Wind Speed and Wind Direction at
Take-off and Landing Site

ST5

Obstruction Detecting Unit
Determines Type of Obstruction

ST6

Removal Device Activating Unit
Activates Selected Obstruction
Removing Device

END

# FIG. 7

# FIG. 8

START

ST21
Vertical
Take-off and
Landing Aircraft is Drone or
the Like?

NO → ST24
Obstruction Detecting Unit
Recognizes "Presence of Bird" as
Type of Obstruction

YES

ST22
Suspicious Remote ID?

NO

YES

ST23
Obstruction Detecting Unit
Recognizes "Presence of
Suspicious Flying Object" as
Type of Obstruction

END

# FIG. 9

Take-off and Landing Site Monitoring Device (30)

- Imaging Device (21) → Image Data Acquiring Unit (41)
- Receiver (24) → Identification Information Acquiring Unit (42)
- Position Detecting Unit (43)
- Wind Specifying Unit (44)
- Obstruction Detecting Unit (45)
- Removal Device Activating Unit (46)
- Obstruction Removing Device (31-1)
- Obstruction Removing Device (31-2)
- Obstruction Removing Device (31-3)
- Management Information → Management Information Acquiring Unit (47)
- Operation State Determining Unit (49)
- Operation Planning Unit (50) → Operation Plan
- Flight Information → Flight Information Acquiring Unit (48)

EP 4 530 183 A1

34

# FIG. 10

| 61 | 62 | 63 | 67 | 68 |
|---|---|---|---|---|
| Image Data Acquiring Circuit | Identification Information Acquiring Circuit | Position Detecting Circuit | Management Information Acquiring Circuit | Flight Information Acquiring Circuit |

| 64 | 65 | 66 | 69 | 70 |
|---|---|---|---|---|
| Wind Specifying Circuit | Obstruction Detecting Circuit | Removal Device Activating Circuit | Operation State Determining Circuit | Operation Planning Circuit |

# FIG. 11

| Year | Month | Day | Time Period | Take-off and Landing Operation State | Parking Operation State | Possibility of Take-off and Landing due to Wind or the Like | | | Presence or Absence of Take-off and Landing | Take-off and Landing Place/ Airspace Occupied | Airspace Entering Time | Landing Time | Take-off Time | Airspace Exiting Time | Parking Place 3-1 Occupied | Parking Place 3-2 Occupied | Parking Place 3-3 Occupied |
|---|---|---|---|---|---|---|---|---|---|---|---|---|---|---|---|---|---|
| | | | | | | Helicopter | Flying Vehicle | Drone | | | | | | | | | |
| ～～～ (Omitted) ～～～ | | | | | | | | | | | | | | | | | |
| 20X5 | 12 | 31 | 19:45 ~19:59 | In Operation | Vacant | Possible | Possible | Possible | Landing | Helicopter ID〇〇〇 | 19:45 | 19:50 | — | — | None | Flying Vehicle ID●●● | Drone ID■■■ |
| 20X5 | 12 | 31 | 20:00 ~20:14 | Operation Stop | Full | Im-possible | Im-possible | Im-possible | None | Maintenance | — | — | — | — | Helicopter ID〇〇〇 | Flying Vehicle ID●●● | Drone ID■■■ |
| 20X5 | 12 | 31 | 23:45 ~23:59 | Operation Stop | Full | Im-possible | Im-possible | Im-possible | None | None | — | — | — | — | Helicopter ID〇〇〇 | Flying Vehicle ID●●● | Drone ID■■■ |
| ～～～ (Omitted) ～～～ | | | | | | | | | | | | | | | | | |
| 20X6 | 01 | 01 | 05:45 ~05:59 | Operation Stop | Full | Im-possible | Im-possible | Im-possible | None | Maintenance | — | — | — | — | Helicopter ID〇〇〇 | Flying Vehicle ID●●● | Drone ID■■■ |
| 20X6 | 01 | 01 | 06:00 ~06:14 | In Operation | Vacant | Possible | Im-possible | Im-possible | Take-off | Helicopter ID〇〇〇 | — | — | 06:00 | 06:05 | None | Flying Vehicle ID●●● | Drone ID■■■ |
| 20X6 | 01 | 01 | 06:15 ~06:29 | In Operation | Vacant | Possible | Possible | Im-possible | Take-off | Flying Vehicle ID●●● | — | — | 06:15 | 06:25 | None | None | Drone ID■■■ |
| 20X6 | 01 | 01 | 06:30 ~06:44 | In Operation | Vacant | Possible | Possible | Im-possible | Landing | Helicopter ID△△△ | 06:30 | 06:35 | — | — | None | None | Drone ID■■■ |
| 20X6 | 01 | 01 | 06:45 ~06:59 | In Operation | Vacant | Possible | Possible | Im-possible | Landing | Flying Vehicle ID▲▲▲ | 06:45 | 06:55 | — | — | Helicopter ID△△△ | None | Drone ID■■■ |
| 20X6 | 01 | 01 | 07:00 ~07:14 | In Operation | Vacant | Possible | Possible | Possible | Take-off | Drone ID■■■ | — | — | 07:00 | 07:12 | Helicopter ID△△△ | Flying Vehicle ID▲▲▲ | None |
| 20X6 | 01 | 01 | 07:15 ~07:19 | In Operation | Vacant | Possible | Possible | Possible | None | None | — | — | — | — | Helicopter ID△△△ | Flying Vehicle ID▲▲▲ | None |

EP 4 530 183 A1

# FIG. 12

| Year | Month | Day | Time Period | Take-off and Landing Operation State | Parking Operation State | Possibility of Take-off and Landing due to Wind or the Like | | | Presence or Absence of Take-off and Landing | Take-off and Landing Place/ Airspace Occupied | Airspace Entering Time | Landing Time | Take-off Time | Airspace Exiting Time | Parking Place 3-1 Occupied | Parking Place 3-2 Occupied | Parking Place 3-3 Occupied |
|---|---|---|---|---|---|---|---|---|---|---|---|---|---|---|---|---|---|
| | | | | | | Helicopter | Flying Vehicle | Drone | | | | | | | | | |
| ～～～～～～ (Omitted) ～～～～～～ | | | | | | | | | | | | | | | | | |
| 20X5 | 12 | 31 | 19:45 ～19:59 | In Operation | Vacant | Possible | Possible | Possible | Landing | Helicopter ID○○○ | 19:45 | 19:50 | — | — | None | Flying Vehicle ID●●● | Drone ID■■■ |
| 20X5 | 12 | 31 | 20:00 ～20:14 | Operation Stop | Full | Impossible | Impossible | Impossible | None | Maintenance | — | — | — | — | Helicopter ID○○○ | Flying Vehicle ID●●● | Drone ID■■■ |
| 20X5 | 12 | 31 | 23:45 ～23:59 | In Operation | Full | Possible | Possible | Possible | None | None | — | — | — | — | Helicopter ID○○○ | Flying Vehicle ID●●● | Drone ID■■■ |
| ～～～～～～ (Omitted) ～～～～～～ | | | | | | | | | | | | | | | | | |
| 20X6 | 01 | 01 | 05:45 ～05:59 | Operation Stop | Full | Impossible | Impossible | Impossible | None | Maintenance | — | — | — | — | Helicopter ID○○○ | Flying Vehicle ID●●● | Drone ID■■■ |
| 20X6 | 01 | 01 | 06:00 ～06:14 | In Operation | Vacant | Possible | Impossible | Impossible | Take-off | Helicopter ID○○○ | — | — | 06:00 | 06:05 | None | Flying Vehicle ID●●● | Drone ID■■■ |
| 20X6 | 01 | 01 | 06:15 ～06:29 | In Operation | Vacant | Possible | Possible | Impossible | Take-off | Flying Vehicle ID●●● | — | — | 06:15 | 06:25 | None | None | Drone ID■■■ |
| 20X6 | 01 | 01 | 06:30 ～06:44 | In Operation | Vacant | Possible | Possible | Impossible | Landing | Helicopter ID△△△ | 06:30 | 06:35 | — | — | None | None | Drone ID■■■ |
| 20X6 | 01 | 01 | 06:45 ～06:59 | In Operation | Vacant | Possible | Possible | Possible | Take-off | Drone ID■■■ | — | — | 06:45 | 06:57 | Helicopter ID△△△ | None | None |
| 20X6 | 01 | 01 | 07:00 ～07:14 | In Operation | Vacant | Possible | Possible | Possible | Landing | Flying Vehicle ID▲▲▲ | 07:00 | 07:10 | — | — | Helicopter ID△△△ | None | None |
| 20X6 | 01 | 01 | 07:15 ～07:19 | In Operation | Vacant | Possible | Possible | Possible | None | None | — | — | — | — | Helicopter ID△△△ | Flying Vehicle ID▲▲▲ | None |

EP 4 530 183 A1

# FIG. 13

# FIG. 14

| 61 | 62 | 63 | 71 |
|---|---|---|---|
| Image Data Acquiring Circuit | Identification Information Acquiring Circuit | Position Detecting Circuit | Supply Information Acquiring Circuit |

| 64 | 65 | 66 | 72 |
|---|---|---|---|
| Wind Specifying Circuit | Obstruction Detecting Circuit | Removal Device Activating Circuit | Charging Management Circuit |

# FIG. 15

EP 4 530 183 A1

FIG. 16

| 61 | 62 | 63 | 73 |
|---|---|---|---|
| Image Data Acquiring Circuit | Identification Information Acquiring Circuit | Position Detecting Circuit | Wind Measurement Data Acquiring Circuit |

| 64 | 65 | 66 | 74 |
|---|---|---|---|
| Wind Specifying Circuit | Obstruction Detecting Circuit | Removal Device Activating Circuit | Weather Information Acquiring Circuit |

# FIG. 17

30 Take-off and Landing Site Monitoring Device

21 Imaging Device
28 Visibility Meter
24 Receiver

41 Image Data Acquiring Unit
55 Visibility Information Acquiring Unit
42 Identification Information Acquiring Unit

43 Position Detecting Unit
44 Wind Specifying Unit
45 Obstruction Detecting Unit
56 Suspicious Flying Object Detecting Unit
46 Removal Device Activating Unit

31-1 Obstruction Removing Device
31-2 Obstruction Removing Device
31-3 Obstruction Removing Device

Detection Information

FIG. 18

| 61 | 62 | 63 | 75 |
|---|---|---|---|
| Image Data Acquiring Circuit | Identification Information Acquiring Circuit | Position Detecting Circuit | Visibility Information Acquiring Circuit |

| 64 | 65 | 66 | 76 |
|---|---|---|---|
| Wind Specifying Circuit | Obstruction Detecting Circuit | Removal Device Activating Circuit | Suspicious Flying Object Detecting Circuit |

# FIG. 19

Take-off and Landing Site Monitoring Device — 30

Radar Device — 93

Position Detecting Unit — 43

Wind Specifying Unit — 44

Imaging Device — 21

Image Data Acquiring Unit — 41

Obstruction Detecting Unit — 45

Removal Device Activating Unit — 46

Obstruction Removing Device — 31-1

Receiver — 24

Identification Information Acquiring Unit — 42

Obstruction Removing Device — 31-2

Obstruction Removing Device — 31-3

Electromagnetic Environment Monitoring Device — 92

Electromagnetic Environment Information Acquiring Unit — 58

Aeronautical Weather Observing Meter — 91

Aeronautical Weather Information Providing Unit — 57

Aeronautical Weather Information

EP 4 530 183 A1

# FIG. 20

| Image Data Acquiring Circuit (61) | Identification Information Acquiring Circuit (62) | Position Detecting Circuit (63) | Aeronautical Weather Information Providing Circuit (77) |
|---|---|---|---|
| Wind Specifying Circuit (64) | Obstruction Detecting Circuit (65) | Removal Device Activating Circuit (66) | Electromagnetic Environment Information Acquiring Circuit (78) |

## INTERNATIONAL SEARCH REPORT

International application No.

**PCT/JP2022/026893**

| A. | CLASSIFICATION OF SUBJECT MATTER |
|---|---|

*B64C 39/00*(2006.01)i; *G05D 1/00*(2006.01)i; *G08G 5/02*(2006.01)i
FI:  G08G5/02 A; B64C39/00; G05D1/00

According to International Patent Classification (IPC) or to both national classification and IPC

| B. | FIELDS SEARCHED |
|---|---|

Minimum documentation searched (classification system followed by classification symbols)

B64C39/00; G05D1/00; G08G5/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2016/170766 A1 (NEC CORP.) 27 October 2016 (2016-10-27) paragraphs [0064]-[0074], [0112]-[0117], [0130]-[0144] | 1-2, 16-17, 20-21 |
| Y | | 3-4, 6, 15, 19 |
| A | | 5, 7-14, 18 |
| Y | JP 2020-201832 A (SOFTBANK CORP.) 17 December 2020 (2020-12-17) paragraphs [0014]-[0049] | 3-4, 6, 15, 19 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 September 2022** | **20 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

| INTERNATIONAL SEARCH REPORT<br>Information on patent family members | | | International application No.<br>**PCT/JP2022/026893** |
|---|---|---|---|
| Patent document<br>cited in search report | Publication date<br>(day/month/year) | Patent family member(s) | Publication date<br>(day/month/year) |
| WO 2016/170766 A1 | 27 October 2016 | US 2018/0092345 A1<br>paragraphs [0116]-[0126],<br>[0165]-[0170], [0183]-[0197] | |
| JP 2020-201832 A | 17 December 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021503677 A